# EUROPEAN PATENT APPLICATION

(11) **EP 4 628 815 A2**
(43) Date of publication of application: **08.10.2025**
(21) Application number: 25197175.0
(22) Date of filing: 25.02.2016
(51) Int. Cl.: F24S 25/61

(54) **PHOTOVOLTAIC MOUNTING SYSTEM WITH CHEMICAL FLASHING**

(30) Priority: 25.02.2015 US 201562120841 P; 23.11.2015 US 201514949820; 25.11.2015 US 201562260178 P; 26.01.2016 US 201615007154; 23.02.2016 US 201615051346
(62) Divisional of application: 16710371.2
(71) Applicant: Tesla, Inc., Austin, TX 78725 (US)
(72) Inventor: ALMY, Charles, San Mateo, CA 94402 (US); HUDSON, Tyrus Hawkes, San Mateo, CA 94402 (US); WEST, Jack Raymond, San Mateo, CA 94402 (US)
(74) Representative: Bryn-Jacobsen, Caelia

(57) **Abstract**

Photovoltaic mounts having sealant injection systems are provided herein. Such sealant injection systems provide improved directional control of sealant flow and improved sealing of roof penetrations during mounting with one or more fasteners. Such systems can include a bracket assembly (20) having a sealant injection package (60). The sealant injection package (60) can include a collapsible sealant injection reservoir (30) adapted to provide directionally controlled release of sealant upon collapse. Such a system (100) can include sealant injection guide that direct flow of sealant during mounting and can further include a sealant ring (1111) and/or a bell-shaped compressing plate (1116) that seals and encloses the injected sealant to facility formation of a chemical flashing and to maintain integrity of the flashing over time. Such systems can be adapted to allow removal and replacement of a sealant injection package (60) or cartridge. Such systems can further be configured as a base assembly with one or more coupling features that maintain the assembly without requiring any additional fasteners.

## Description

### CROSS-REFERENCES TO RELATED APPLICATIONS

This claims the benefit of priority of U.S. Provisional Patent Application No. 62/120,841 [Atty Docket No. P124-1PUS] filed on February 25, 2015; Non-Provisional Patent Application No. 14/949,820 [Atty Docket No. P124-2NUS] filed on November 23, 2015; U.S. Provisional Patent Application No. 62/260,178 [Atty Docket No. P124-3PUS] filed November 25, 2015; Non-Provisional Patent Application No. 15/007,154 [Atty Docket No. P235-1NUS] filed on January 26, 2016; and Non-Provisional Patent Application No. 15/051,346 [Atty Docket No. P124-4NUS] filed on February 23, 2016; each of which is incorporated herein by reference in its entirety.

### FIELD OF THE INVENTION

The invention relates to photovoltaic energy generation mounting systems and more specifically to systems and methods for installing photovoltaic modules on composition shingle roofs.

### BACKGROUND OF THE INVENTION

Although total market penetration of solar into the relevant base of potential customers remains relatively low in the United States (e.g. less than about one percent), residential and commercial solar installs have enjoyed double digit growth since the mid to late 2000s. Despite this recent success, developments to reduce cost, increase efficiency and improve overall home integration are ongoing and must continue to increase solar's relatively meager market share when compared to fossil fuel-based grid power.

One problem that remains to be solved is an economic and effective solution to improve sealing of roof surface penetrations to prevent water from leaking into the roof structure. Whether photovoltaic modules are attached to rails, or proprietary rail-free mounting systems, the modules must be securely attached to the roof, which typically involves using a flashing combined with a lag bolt and seal. A pilot hole is typically drilled where the rafter is thought to lie, and if so, is followed by a larger drill hole to accommodate the lag bolt. The flashing is then positioned so that the lag through-hole and seal are positioned over the pre-drilled hole. Typically a puck or other structure is then placed on the flashing a lag bolt is then passed through the puck, through the through-hole in flashing and into the pre-drilled hole. The lag bolt is then torqued down to secure the puck to the roof so that the photovoltaic modules can then be mounted to the puck and flashing.

Although flashings cover up a lot of space, potentially covering mis-drilled or off-center pilot holes, flashings are relatively expensive because they require more metal than direct mounted solutions. Also, in order to set the flashing at the proper location, partially under the up-roof course of shingles, it is often necessary to remove existing nails holding down those shingles. Each time a nail is removed, another potential leak point is created.

Some installers have utilized direct mount or deck mounted solutions which abandon the flashing in favor of a flat bottomed mounting bracket or foot that is screwed or lagged directly into the roof. In cases where the lag is driven through a roof rafter, a single lag bolt may be used. In other cases, where the foot is simply screwed into the plywood that comprises the roof deck regardless of rafter location, three or more lag bolts may be used to achieve the requisite strength. In either case, the holes made in the roof by the one or more lag bolts must be sealed to prevent water from leaking in around the threads of the lag and/or to fill any nearby miss-drilled pilot holes.

To deal with this problem, installers have used caulk or other sealant, typically dispensed from a separate tube or caulk gun to fill these holes as the installation proceeds. This can be messy for the installer, requires a separate large and bulky tool (e.g., caulk gun), and requires another product SKU to be stocked in the truck's inventory. Moreover, there is no way to ensure that the installer remembers, or even he does remember, that he actually applies caulk or sealant to the lag holes. Therefore, there exists a need for photovoltaic mounting systems that provide reliable and controlled sealing of any penetrations of the roof while minimizing mess and installer mishaps.

### BRIEF SUMMARY OF THE INVENTION

In one aspect, a sealant injection mounting system includes at least one photovoltaic mounting bracket and a sealant injection package. In some embodiments, the mounting bracket includes a lower base portion adapted for mounting on a roof surface with one or more fasteners, such as a lag bolt, and an upper support portion adapted for supporting a photovoltaic module or associated support component, such as a track or rock-it type coupling component. The sealant injection package includes a collapsible sealant reservoir containing a flowable sealant within. The sealant injection package is adapted for directionally controlled release of the flowable sealant upon collapse of the reservoir so as to seal any penetrations and form a chemical flashing on the roof surface. In some embodiments, the sealant injection package is separable and removable from the mounting bracket so that the sealant injection package can be assembled by a user with the mounting bracket or replaced or exchanged as needed. In some embodiments, the sealant injection package is provided to the user separately or may be compatible for use with differing types of mounting brackets.

In some embodiments, the system includes a compressing plate disposed adjacent the collapsible sealant reservoir of the sealant injection packaging. The compressing plate includes a through hole through which the lag bolt extends so that tightening of the lag bolt into the roof surface during mounting of the bracket to the roof surface moves the plate against the collapsible reservoir, which compresses the reservoir and effects directionally controlled release of the flowable sealant between the base portion and the roof surface and around the portion of the lag bolt penetrating the roof surface. In some embodiments, the compressing plate can include any of a head of the lag bolt, a washer, a nut, an upper plate of the sealant injection package, a cap or plate disposed atop the sealant injection package and separable therefrom, or any combination of these features.

In some embodiments, the sealant injection system includes a sealant guide for directing flow of the flowable sealant delivered from the reservoir during collapse between the base portion and the roof surface and around a portion of the lag bolt extending through the roof surface. The sealant guide can include any of: a hole or slot defined in a bottom surface of the base portion of the bracket and a shaped component disposed along a bottom of the sealant injection package or a combination of these features. The shaped component can be an integrated feature along the bottom of the sealant injection package or a separable component of the sealant injection package that releasably couples with each of the base portion of the bracket assembly.

Such sealant guides can include one or more coupling features for coupling to the bracket and/or the sealant injection package and may define an interior sealant flow path to direct flow of sealant to a desired location upon collapse of the collapsible reservoir of the sealant injection package.

In some embodiments, mounting bracket includes an integral component having a base portion adapted for mounting on the roof surface with one or more lag bolts and a support portion adapted for coupling with a photovoltaic coupling, the support portion protruding away from the roof surface when the base portion is mounted on the roof surface.

In some embodiments, the sealant injection package a includes a rigid or semi-rigid outer shell and a frangible portion in fluid communication with the interior of the sealant reservoir and through which the flowable sealant is released when the reservoir is collapsed. The outer shell can be defined as a cylindrical shell with multiple tiers dimensioned to nest within one another so as to collapse the reservoir when the lag bolt is torqued into the roof. The clamping plate can be defined as a cylindrical cap positioned atop the sealant injection package and below a head or a nut of the lag bolt such that when the lag bolt is torqued against the roof, the cap covers the collapsed sealant injection package.

Some embodiments further include a sealant guide adapted to releasably couple with the base portion of the bracket along an upper side and to releasably couple with a bottom side of the sealant injection package and to releasably couple with a bottom side of the sealant injection package. The sealant guide can be adapted so as to define a flow path that directs flow of sealant upon collapse of the reservoir between the base portion and the roof surface and around a portion of the lag bolt that penetrates the roof surface. Such embodiments can further includes a planar spacer, such as foam pad or disc, adapted for placement between the base portion of the bracket and the roof surface. The spacer includes a through hole for the lag bolt to extend through a defined an interior enclosed space between the base portion of the bracket and the roof surface so as to contain flow of sealant within the space upon collapse of the sealant reservoir.

In some embodiments, the mounting system includes a specialized lag bolt adapted to allow removal of the bracket after mounting of the bracket on the roof. Such a lag bolt can include a threaded portion at both opposing ends so that a nut positioned on the top end allows for torqueing of the lag bolt into the roof during installation. Such a lag bolt can further include a an intermediate portion with a polygonal cross-section to allow removal of the lag bolt if desired and a distally tapered portion disposed distal of the intermediate shaft portion dimensioned to break the sealant guide to allow flow of adhesive into the space defined by the spacer.

In some embodiments, the sealant injection package includes a cylindrical piston with a through-hole to allow passage of the lag bolt and a piston portion that is engaged when a lag bolt is torqued down through the at least one photovoltaic mounting bracket thereby compressing the collapsible sealant reservoir and injecting sealant between the mounting bracket and a roof surface and around the lag bolt along the roof penetration. The cylindrical piston can include a rigid or semi-rigid out shell, the collapsible cylindrical reservoir dispose within, a disc atop the cylindrical reservoir for compressing the collapsible reservoir, and a frangible portion along the bottom of the cylindrical reservoir to effect directionally controlled release of the sealant upon collapse of the reservoir. The cylindrical piston-type sealant package can further include a sealant guide integrated with the piston. Such a sealant guide can include a protruding ridge along the bottom of the sealant injection package that interfaces with a hole or slot in the base portion of the bracket.

In some embodiments, the system includes a mounting bracket assembly having a base portion defined by a rectangular extrusion having a lengthwise channel on a bottom side and a sealant injection package that can be removably position within the base portion. The sealant injection package can include one or more collapsible sealant reservoir packets; and a carrier for supporting the packets, wherein the carrier is slidable into the channel of the base portion to allow insertion, removal and/or replacement of the sealant reservoir packets.

In some embodiments, the sealant injection package includes a collapsible cylindrical sealant reservoir containing a flowable sealant, the reservoir surrounding a through passage extending longitudinally through which the lag bolt extends during installation, an outer cylindrical shell in which the sealant reservoir is disposed; and a disc atop the cylindrical sealant reservoir so as to effect uniform collapse of the reservoir when the disc is compressed against the sealant reservoir. The outer shell can include multiple tiers dimensioned so as to nest within one another so as to collapse the reservoir when the lag bolt is torqued into the roof.

In some embodiments, the mounting system includes at least one photovoltaic mounting bracket including a surface adapted to rest on a roof surface; at least one reservoir of sealant mechanically coupled to the at least one photovoltaic mounting bracket; and a piston portion that is engaged when a lag bolt is torqued down through the at least one photovoltaic mounting bracket thereby compressing the at least one reservoir and injecting the flowable sealant between the at least one mounting bracket and the roof surface and around the lag bolt.

In some aspects, the mounting systems are adapted for use with a sealant injection system that provides improved directional release of sealant to seal any roof penetrations while substantially containing the released sealant within the components of the system, thereby reducing or elimination any mess and drastically improving ease of installation. In other aspects, the sealant injection systems described within can be readily positioned within or removed from the associated mounting bracket to allow for ready assembly, replacement or exchange of sealant injection systems as desired. Such configurations allow sealant injection packages to be provided separately as needed for a particular application or as required for the environmental conditions of a geographical area in which the mounting systems are being installed.

In various embodiments, the system includes a cartridge of sealant material that provides a chemical flashing when mounted on a roof surface. In various embodiments, the cartridge of sealant material is discharged between the photovoltaic mounting system and roof surface by the torqueing down of a mechanical fastener connecting the mounting system to the roof surface. In various embodiments, the mechanical fastener can be a lag bolt, while in other embodiments, the mechanical fastener can a hanger bolt. In various embodiments, the system can further include a compressing member or plate that presses against a base assembly to compress the sealant cartridge, which forces the sealant through apertures defined in the base assembly to form a chemical flashing on the roof surface. The chemical flashing is formed to provide a water resistant seal around the mechanical fastener. In various embodiments, the compressing plate can be a rigid disk, although in various other embodiments, the compressing plate can be formed in different shapes. In various embodiments, the system can include a photovoltaic module mounting bracket having a photovoltaic module coupling device that is attached to the base assembly. In some embodiments, the module mounting bracket is attached to the base assembly via a nut and the top threaded portion of the hanger bolt attaches the base assembly to the roof surface. The base assembly can be formed in a circular shape resembling a puck, although it is appreciated that the base assembly can be formed in various non-circular shapes (e.g. oval, square, rectangular) as needed for a particular application. In one aspect, the invention relates to a photovoltaic mounting system for mounting on a roof surface that includes a base assembly adapted to couple with and support a mounting bracket supporting a photovoltaic module coupling device. The base assembly includes a through-hole for insertion of a mechanical fastener. In various embodiments, the base assembly includes a sealant guide, a compressing member or plate, and a sealant cartridge containing a flowable sealant sealed. In various embodiments, the sealant cartridge is held between the sealant guide and the compressing member within the base assembly without requiring any additional separate coupling members to maintain the assembly. One or more of the sealant guide, the base and the compressing plate can include one or more coupling features for releasably securing the components of the base assembly together without requiring any additional separate coupling member, such as a mechanical fastener or other fastening member.

In various embodiments, the base assembly includes a sealant guide having a first set of coupling features that releasably couple with the sealant cartridge or the compressing plate to hold the base assembly together via the one or more coupling features. The first of coupling features can include multiple tabs extending from or near an outer periphery of the sealant guide towards the compressing plate that are adapted to releasably engage with an outer periphery of the compressing plate to maintain the sealant cartridge between the sealant guide and the compressing plate. The compressing plate can include one or more openings along the periphery thereof that are arranged to receive a distal retention feature on each of the plurality of tabs. In various embodiments, each of the plurality of tabs of the first set includes a release feature on a distal end thereof to facilitate manual release of the compressing member by pressing against the release features of the plurality of tabs.

In various embodiments, the base assembly includes a base adapted to releasably couple to the sealant guide by a second set of coupling features of the sealant guide. The sealant guide includes a central hole for passage of the mechanical fastener and a series of apertures distributed radially about the central hole to facilitate uniform distribution of flowable sealant around any roof surface penetration through which the mechanical fastener extends when mounted on the roof surface. The base also includes a central hole for passage of the mechanical fastener and multiple openings distributed about the central hole that are aligned with the plurality of apertures in the sealant guide when mounted on the roof surface to allow flow of sealant therethrough. In various embodiments, the second set of coupling features comprises a plurality of tabs extending towards the base, each of the tabs having a distal retention feature adapted to engage an edge of the multiple openings in the base. In various embodiments, the retention feature is defined as an outwardly extending wedge shaped portion positioned to facilitate lateral deflection of the tabs when the guide is pressed against the base so as to provide a snap-fit coupling between the guide and the base. In various embodiments, the base has an underside recess on a roof-facing side that defines a space between the base and the roof when mounted thereon for flowable sealant to fill so as to form the chemical flashing. In addition, a sealant ring can be used to define and seal a space between the base and roof surface in which the chemical flashing is formed.

In another aspect, the photovoltaic mounting system includes a base assembly having a sealant cartridge with a breakable seal on a roof facing side to facilitate directionally controlled release of flowable sealant through the seal upon fastening of the base assembly onto the roof. The base assembly can further include a sealant guide for supporting that sealant cartridge and securing the sealant cartridge to a base or the guide can be integrated with the base. The sealant guide can include one or more puncture tubes with one or barbs directed towards the breakable seal to facilitate breaking of the seal upon fastening of the base assembly to the roof surface.

In various embodiments, the base assembly includes a compressing member disposed atop a collapsible sealant cartridge. The compressing plate can be defined as a compressing plate having a planar surface for engaging and pressing against the sealant cartridge. The top of the compressing plate facing away from the sealant cartridge can be defined as a convex outer surface face to inhibit accumulation of rain and/or debris when mounted on the roof surface. Typically, the compressing plate is defined has a circular shape, although it is appreciated that the compressing plate can be formed in various other non-circular shape. In various other embodiments, the compressing plate is defined as a bell-type shape having an outer periphery that extends further below an interior portion that engages against the top of the sealant cartridge. This bell-type shape allows the outer periphery of the compressing plate to seal against the roof and/or a sealant ring on the roof so as to enclose the compressed sealant reservoir therein and contain any excess sealant extruded when the assembly is mounted onto the roof surface.

In various embodiments, a photovoltaic mounting system for mounting to a roof surface includes a base assembly adapted to couple with and support a mounting bracket supporting a photovoltaic module coupling device. The base assembly includes a through-hole for insertion of a mechanical fastener, such as a lag bolt or a hangar bolt. In various embodiments, the base assembly includes a base, a compressing member, a sealant guide having a first set of coupling features adapted to releasably couple with the compressing member and a sealant reservoir containing a flow-able sealant sealed. The sealant cartridge is held between the sealant guide and the compressing member by the first set of coupling features. The first set of coupling features include a plurality of protrusions fittingly received within corresponding openings in the compressing member. In various embodiments, each of the tabs of the first set includes a release feature on a distal end to facilitate manual release of the compressing member by pressing against the release features of the plurality of tabs.

In various embodiments, the photovoltaic mounting system includes a base assembly having an integrated sealant guide and base. In some embodiments, the integrated sealant guide base can further include an integrated sealant reservoir. In other embodiments, the sealant guide base can be used with a removable sealant cartridge. In various embodiments, the sealant guide, sealant reservoir and base are integrated within a single component having ribs or gussets that provide sufficient support to maintain sealed sealant reservoir yet allow directionally controlled collapse of the reservoir when the base assembly is fastened to the roof surface.

In various embodiments, the photovoltaic mounting system includes a base assembly with a sealant cartridge and a reinforcement ring disposed about the cartridge. The reinforcing ring is adapted to provide reinforcement against blow-out of sealant through a side-wall of the sealant cartridge. In various embodiments, the reinforcing ring is adapted to fittingly receive the sealant cartridge and extends above the roof surface a lower height than the cartridge so as to allow compression of the sealant cartridge during installation.

In various embodiments, the photovoltaic mounting system includes a photovoltaic module coupling device, a mounting bracket supporting the photovoltaic module coupling device, and a base assembly releasably coupled to the mounting bracket and having a through-hole for insertion of a mechanical fastener. The base assembly can include a sealant guide, a compressing member, and a sealant cartridge containing a flowable sealant sealed. In various embodiments, the sealant cartridge is held between the sealant guide and the compressing member within the base assembly without requiring any additional separate coupling members to maintain the assembly.

In another aspect, anchors adapted for anchoring in a planar surface and that include a sealant injection system are provided herein. Such anchors can include an anchor base with a through-hole for passage of a mechanical fastener therethrough and a support surface for supporting a collapsible sealant reservoir spaced above the surface when mounted thereon. The support surface further includes an aperture for directing flow of sealant therethrough to where the mechanical fastener penetrates the planar surface upon collapse of the reservoir by securing of the mechanical fastener. Such anchors can further include a recessed portion that defines a cavity between the support surface and the planar surface into which the flowable sealant flows upon collapse of the reservoir. The recessed portion can be dimensioned so as to surround where the fastener penetrates to provide improved sealing of the penetration and/or to form a more uniform layer of cured sealant of at least a minimum thickness to improve sealing and/or form a chemical flashing.

In yet another aspect, mounting systems are provided that include an anchor with a sealant injection package. Such system can include an anchor including a base having a first array facing side and a second, opposing roof-facing side. The base includes a through-hole extending between the first and second sides for passage of a mechanical fastener, such as a lag bolt, through the base into the roof surface. The second roof-facing side can include a roof contacting surface extending about a perimeter of the second side. The mechanical fastener is adapted to penetrate a roof surface and engage the first side of the base so as to anchor the base when the mechanical fastener is torqued into the roof surface. The sealant injection package can be disposed within the base or can include one or more portions of the base or components that interface with the base. Typically, the sealant injection package includes a collapsible sealant reservoir, such as a foil packet, that contains a flowable sealant. The sealant injection package includes a support surface that is adapted to support the sealant reservoir spaced apart from the roof surface when the roof contacting surface contacts the roof. The support surface includes an aperture through which the flowable sealant extrudes when the reservoir is collapsed to direct the flowable sealant toward a roof penetration through which the mechanical fastener extends. The support surface can be a portion of the base or can be a portion of a sealant carrier adapted to carry the collapsible sealant reservoir. The anchor can further includes a recessed portion that defines an underside cavity between the support surface and the roof surface surrounding the mechanical fastener that contains the extruded flowable sealant about the roof penetration through which the mechanical fastener extends and forms a chemical flashing thereon.

In various embodiments, such mounting systems having sealant injection systems further include a compressing plate disposed above the sealant injection package. The compressing plate can include a hole that aligned with the through-hole of the base so that tightening of the mechanical fastener during mounting compresses the plate against the sealant injection package. Typically, the hole in compressing plate is smaller than the aperture in the support surface so that flowable sealant is directed primarily, if not entirely, through the aperture in the support surface. In some embodiments, the aperture in the support surface is substantially larger than the mechanical fastener, such as by between 10 to 300%. Typically, the hole in the compressing plate is only marginally larger width-wise than the mechanical fastener, such as by less than 25%, to inhibit passage of flowable sealant therethrough.

In various embodiments, such mounting systems having sealant injection systems include a compressing plate that is fittingly receivable in a receptacle in the first side of the base. Alternatively, the compressing plate can be disposed within an underside cavity of the base. The compressing plate includes a planar compressing surface disposed above the collapsible sealant reservoir with a hole for passage of the mechanical fastener therethrough. Such a compressing plate can further include an upwardly protruding collar surrounding the hole that extends above the top opening of the through-hole in the first side of the base for engagement with the mechanical fastener.

In various embodiments, the anchor base includes one or more support coupling features on the first side of the base for interfacing with a corresponding coupling feature of a support foot for supporting a photovoltaic module or an associated component. Such support coupling features can be holes or any feature suitable for coupling with a support adapted for supporting a photovoltaic module. The anchor base can include multiple coupling features in differing positions along the first side to allow differing configurations of a support foot as needed to extend an associated connector to a desired location on the photovoltaic module. In various embodiments, the anchor base includes at least two rows of support coupling features on opposite sides of the top opening of the through-hole to allow a range of differing configurations of the support foot.

In various embodiments, the collapsible sealant reservoir comprises a frangible packet filled with the flowable sealant. Such a packet can be formed of a foil or polymer that can be easily torn or punctured by insertion of the lag bolt therethrough, but is sufficiently strong and sealable to contain the flowable sealant within during shipping. Typically, the flowable sealant is sealed within the packet and is adapted to cure when exposed to air and/or moisture upon release from the packet.

In various embodiments, such mounting system having a sealant injection package can include a carrier defining the support surface on which the collapsible sealant reservoir is supported. The carrier can be dimensioned to be received within an underside cavity of the base and can include an aperture in the support surface that is aligned with the through-hole of the base. The carrier can includes one or more retaining features, such as hooks, clips, tethers, or any suitable feature for retaining the carrier within the base. The carrier can further include an underside recessed portion that defines a cavity between the support surface and the roof surface in which the chemical flashing is formed. The system can further include a compressible gasket that circumscribes underside recessed portion of the carrier so as to fill any spaces between mating surfaces and contain any excess sealant within.

In various embodiments, such mounting systems can include an anchor base having a top surface with a recessed shoulder circumscribing the top opening of the through-hole. Such a configuration can provide a load path applied through a head of the mechanical fastener during tightening that extends through the base via the shoulder so as to reduce or eliminate loads applied to the carrier. Such embodiments can utilize a carrier formed of a plastic or thermo-resin, while the anchor base is typically formed of a more rigid, higher strength material, such as a cast metal (e.g. aluminum or steel alloy).

In another aspect, photovoltaic mounting systems for mounting on a roof surface can include an anchor having a through-hole for passage of a mechanical fastener and a sealant injection package. The anchor can include a base defined as a metal shell having an open underside cavity circumscribed by a roof contacting surface. The sealant injection package can be disposed within the open underside cavity and include a collapsible sealant reservoir containing a flowable sealant. The package can further include a compressing plate disposed atop the collapsible sealant reservoir and a carrier adapted to support the collapsible sealant reservoir spaced away from the roof surface. The carrier can further include a recessed portion that defines a cavity between the carrier and the roof surface that surrounds the mechanical faster into which the flowable sealant is extruded through an aperture in the carrier. The recessed portion can be dimensioned so as to provide a more uniform, layer of sealant of at least a minimum thickness, such as a thickness between 2 mm to 20 mm, so as to form a chemical flashing about the sealed penetration of the fastener.

In various embodiments, such mounting systems can include an anchor base having one or more pairs of alignment markers viewable by a user during mounting. The alignment markers correspond to outer bounds of the recessed cavity of the carrier so as to allow the user to visualize the eventual location of the chemical flashing formed within the cavity Such a configuration allows positioning of the base over any secondary roof penetrations adjacent to the roof penetration through which the mechanical fastener extends.

In yet another aspect, such mounting system having sealant injection packages can include an anchor base that is substantially rectangular in shape and include a main portion and a stepped-up portion along an up-roof side of the rectangular base that engages a first shingle course while the main portion engages a second down-roof adjacent shingle course. The anchor base can further include a recessed shoulder portion defined about a top opening of the through-hole so as to be engageable with a head of the mechanical fastener or an associated component. The base can further include an upwardly open groove extending down-roof from the recessed shoulder portion and one or more weep holes or notches in a down-roof side of the rectangular base shell for drainage of any accumulated water. In various embodiments, such a rectangular anchor base can include outwardly curved portions along lateral sides of the main portion so as to contain any excess flowable sealant extruding beyond the cavity defined by the recessed portion of the carrier.

### BRIEF DESCRIPTION OF THE DRAWINGS

FIG. 1 is a side-facing perspective view of a photovoltaic mounting for use with the lag bolt sealer injector system according to various exemplary embodiments of the invention.
FIG. 2 is a front-facing perspective view of the photovoltaic mounting system for use with the lag bolt sealer injector system according to various exemplary embodiments of the invention.
FIG. 3 is an exploded view of a photovoltaic mounting system for use with the lag bolt sealer injector system according to various exemplary embodiments of the invention.
FIG. 4 is a partial cut-away view showing internal structure of a lag bolt sealer injector system in a photovoltaic mounting system according to various exemplary embodiments of the invention.
FIG. 5 is bottom view of a photovoltaic mounting system for use with the lag bolt sealer injector system according to various exemplary embodiments of the invention.
FIG. 6 is a sealant injector packet for a photovoltaic mounting system according to various exemplary embodiments of the invention.
FIG. 7 is an end view of a photovoltaic mounting system including a lag bolt sealant injector after a lag bolt has compressed the sealant packet according to various exemplary embodiments of the invention.
FIG. 8 is a side-facing perspective view of another photovoltaic mounting system including a lag bolt sealant injector system according to various exemplary embodiments of the invention.
FIG. 9 is an exploded view of another photovoltaic mounting system for use with a lag bolt sealant injector system according to various exemplary embodiments of the invention.
FIGS. 10A-10B are perspective views of another photovoltaic mounting system including a lag bolt sealant injector system according to various exemplary embodiments of the invention.
FIGS. 11A-11B illustrates an external and a partial cut-away view, respectively, of a lag bolt sealant injector according to various exemplary embodiments of the invention.
FIGS. 12A-12C illustrates several detail views of the injection mechanism of a lag bolt sealant injector according to various exemplary embodiments of the invention.
FIGS. 13A-13B illustrate a partial cut-away view of the elements shown in FIG. 12 before and after collapse of the sealant reservoir by torqueing of the lag bolt into the roof.
FIGS. 14A-14B are internal cut-away views of the elements shown in FIGS. 12 and 13, including the mechanism that permits the center tube to collapse according to various exemplary embodiments of the invention.
FIG. 15 illustrates another photovoltaic mounting system for use with a lag bolt sealant injector system according to various exemplary embodiments of the invention.
FIG. 16 illustrates an exploded view of the photovoltaic mounting system shown in FIG. 15.
FIG. 17 illustrates a detail view of the bracket of the photovoltaic mounting system shown in FIG. 15.
FIG. 18 illustrates a detail view of a specialized lag bolt for use with the photovoltaic mounting system shown in FIG. 15.
FIGS. 19A-19C illustrate several view of the sealant reservoir for use with the photovoltaic mounting system shown in FIG. 15.
FIGS. 20A-20B illustrate a perspective view and a cross-sectional side view of a sealant guide for use with the photovoltaic mounting system shown in FIG. 15.
FIGS. 21A-21B illustrate cross-sectional side views of the photovoltaic mounting system shown in FIG. 15 during mounting before and after collapse of the sealant reservoir, respectively.
FIG. 22A illustrates removal of the bracket assembly after mounting of the photovoltaic mounting system of FIG. 15 and replacement with another mounting bracket, respectively on the same lag bolt sealed shown in FIG. 22A.
FIG. 22B illustrates replacement of the mounting bracket removed in FIG. 11A with another mounting bracket on the same lag sealed lag bolt.
FIGS. 23 and 24 illustrate an assembled view and an exploded view of a photovoltaic mounting system adapted to form a chemical flashing according to an exemplary embodiment.
FIGS. 25A-25C illustrate several views of a base assembly of a photovoltaic mounting system according to an exemplary embodiment.
FIG. 26 illustrates an exploded view of a base assembly of a photovoltaic mounting system according to an exemplary embodiment.
FIGS. 27A and 27B illustrate an exploded view and an exploded view, respectively, of a base assembly of a photovoltaic mounting system according to an exemplary embodiment.
FIGS. 28A-28C illustrate sequential views showing installation of a base assembly of a photovoltaic mounting system according to an exemplary embodiment.
FIGS. 29A and 29B illustrate an exploded view and an assembled view, respectively, of a photovoltaic mounting system adapted to form a chemical flashing according to an exemplary embodiment.
FIGS. 30 and 31 illustrate an assembled view and an exploded view, respectively, of a photovoltaic mounting system adapted to form a chemical flashing according to another exemplary embodiment.
FIG. 32 illustrates an exploded view of a base assembly of the photovoltaic mounting system of FIG. 31.
FIG. 33 illustrates select components of the base assembly of the photovoltaic mounting system of FIG. 31.
FIG. 34A illustrates an exploded view of a base assembly of a photovoltaic mounting system according to another exemplary embodiment.
FIG. 34B illustrates an exploded view of a base assembly of a photovoltaic mounting system according to yet another exemplary embodiment.
FIG. 35 illustrates several views of a base of the base assembly shown in FIG. 342B.
FIGS. 36A and 36B illustrate bases for use in a base assembly of a photovoltaic mounting system according to alternative embodiments.
FIG. 37 illustrates a photovoltaic mounting system according to another exemplary embodiment.
FIG. 38 illustrates an exploded view of the photovoltaic mounting system shown in FIG. 37.
FIG. 39A illustrates an exploded view of the base assembly of the photovoltaic mounting system shown in FIG. 37.
FIG. 39B illustrates a detailed view of the pins of the sealant reservoir heat bonded to corresponding holes in compressing plate of the base assembly in FIG. 39A.
FIG. 40 illustrates an exploded view of the base assembly components according to another embodiment of a photovoltaic mounting system.
FIGS. 41A-41C illustrate sequential cross-sectional views of an exemplary photovoltaic mounting system before, during and after installation according to various embodiments.
FIG. 42 illustrates an underside view of an integrated guide base according to another embodiment of a photovoltaic mounting system.
FIGS. 43A and 43B illustrate a cross-sectional detailed and an underside view, respectively, of the integrated guide base in FIG. 42 indicating a sealant flow path during installation according to various embodiments.
FIG. 44 illustrates a photovoltaic mounting system according to another exemplary embodiment.
FIG. 45 illustrates an exploded view of the photovoltaic mounting system of FIG. 44.
FIG. 46A illustrates an exploded view of the base assembly of the photovoltaic mounting system of FIG. 44.
FIG. 46B illustrates an assembled view of the base assembly of the photovoltaic mounting system of FIG. 44.
FIGS. 47A and 47B illustrate perspective views of the top-side and the bottom, roof-facing side, respectively, of an integrated guide base of the photovoltaic mounting system of FIG. 44.
FIG. 48 illustrates a cross-sectional side of the integrated guide base of the photovoltaic mounting system of FIG. 44.
FIGS. 49A-49B are perspective views of a top side and an underside of an anchor system having a sealant injection package, in accordance with various embodiments.
FIG. 50 is an exploded view of the anchor system shown in FIG. 49A, in accordance with various embodiments.
FIG. 51 is a cross-sectional view of the anchor system in FIG. 49A during mounting on a roof surface, in accordance with various embodiments.
FIG. 52 is a perspective view of a mounting system having an anchor with a sealant injection package, in accordance with various embodiments.
FIG. 53 is an exploded view of the mounting system shown in FIG. 52, in accordance with various embodiments.
FIG. 54 is a perspective view of yet another anchor system having a sealant injection package, in accordance with various embodiments.

### DETAILED DESCRIPTION OF THE INVENTION

The present invention seeks to ameliorate some if not all of the shortcomings of the prior art with a photovoltaic mounting system that includes a sealant reservoir and injector mechanism that automatically controls injection of sealant in and around a lag hole as a lag bolt is torqued down to attach the photovoltaic mounting hardware to the roof. In various embodiments, the lag bolt may engage a piston or other structure that comprises a package containing sealant and force sealant to flow between the mounting hardware and the roof surface as the lag bolt is torqued down. In various embodiments, the photovoltaic mounting system may come pre-loaded with the injector system so that the installer can guarantee that sealant is applied to every lag bolt, regardless of whether the installer intentionally does so. In other embodiments, the sealant reservoir is separable from the mounting bracket so that the sealant reservoir can be replaced as needed or assembled according to differing specifications before shipment of the mounting system to the user.

The attached Figures illustrate several injector systems useable with specific photovoltaic mounting systems, however, these illustrated embodiments are exemplary only. It should be appreciated that the broader concept of an integrated lag bolt sealant injector that controls injection of sealant during mounting of a fastener may take many different forms beyond those shown here and may be usable with many different roof-top photovoltaic mounting systems without departing from the spirt or scope of the invention.

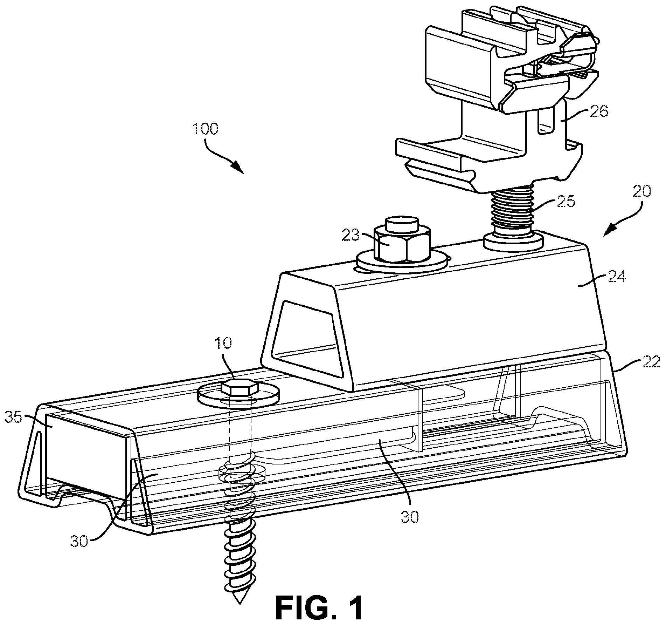

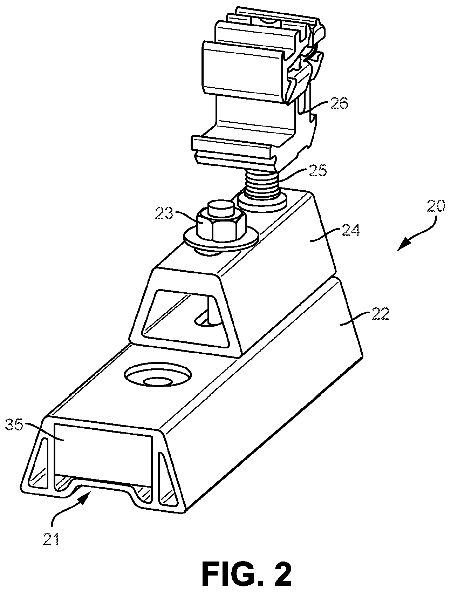

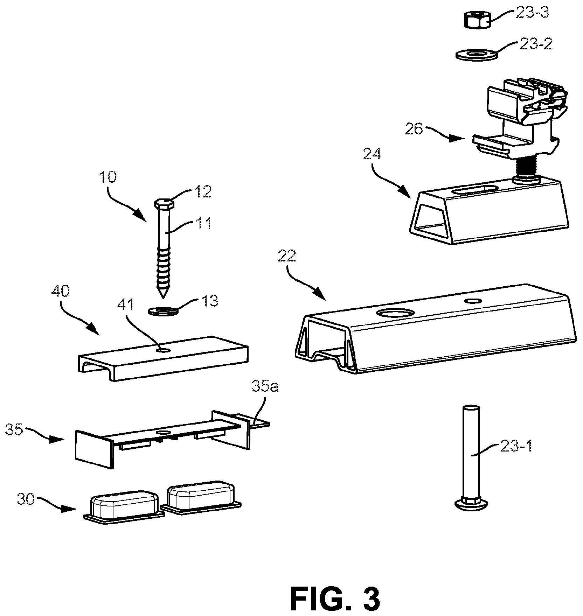

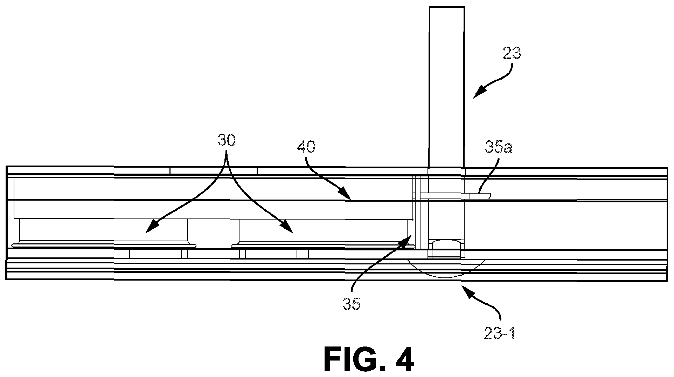

Referring now to FIGS. 1-7, these figures all illustrate various views of a particular exemplary embodiment of a lag bolt sealant injector system combined with a particular exemplary embodiment of a photovoltaic mounting system. System 100 includes bracket assembly 20 for securing a photovoltaic module to a roof surface with lag bolt 10 and a pair of sealant reservoirs 30 carried within removable plastic carrier 35. The bracket assembly 20 depicted in these figures is a two-piece system that comprises base portion 22 (e.g. an extruded Aluminum foot) that is designed to rest on a planar roof surface and upper foot assembly 24 that rests of the foot portion and that includes an integrated photovoltaic module coupling device 26 such as the rock-it style connector shown in FIGS. 1-3. It should be appreciated that coupling device 26 is exemplary only and that in various embodiments, a different coupling device, such as a wrap-around or clamping coupling device may be used without departing from the spirit or scope of the invention. Upper foot assembly 24 is movable with respect to the foot via a slot formed in the top and bottom of the upper foot assembly that allows a bolt to pass through, such as carriage bolt 23-1 depicted in FIGS. 3 and 4. Other fastening mechanisms may be used to allow the upper foot assembly to pivot with respect to base portion 22. In the embodiment shown in these figures, a locking nut and washer firmly secure upper foot assembly 24 to base portion 22.

It should be appreciated that the photovoltaic mounting system shown in FIGS. 1-8 may be utilized alone, that is without the lag bolt sealant injector system of the present invention, however, it is illustrated with such a system merely to highlight the utility of integrated lag bolt sealing and to explain how the sealant injector may be activated by simply applying torque to a mounting system lag bolt. It is further appreciated that the lag sealant injection system is removable from the bracket such that it can be assembly prior to shipping, for example if the sealant has limited shelf-life, or can be selected from a plurality of different sealants according to required specification as needed. For example, when shipping to colder climates with below freezing temperatures, sealant injection systems that utilize sealants that can withstand such temperature can be used. In another aspect, use of a removable sealant injection system allows a user or supplier to switch out or replace the sealant injection system or individual sealant reservoirs as needed or to supply the systems or sealant reservoirs separately.

In various embodiments, the injection system comprises one or more compressible or collapsible sealant reservoirs adapted to provide directional release of the sealant from the reservoir upon collapse or compression of the reservoir. In some embodiments, the sealant reservoirs or packets have a compressible shell portion and a portion having a foil or other thin, breakable layer that allows sealant to flow out when the shell portion of the packet is compressed. The sealant reservoirs may be dimensioned to be received within the bracket or associated carrier in a particular orientation so that the foil or breakable layer is positioned to provide directionally controlled release of the sealant. In addition, the compressible shell portion may be formed of a material that is semi-rigid or rigid, such as a hardened plastic, so as to provide sufficient rigidity to inhibit inadvertent collapse of the reservoir and release of the sealant during handling and shipment of the reservoirs, yet sufficiently weak to allow compression or collapse of the reservoir when subjected to a force sufficient to drive a lag bolt into the roof surface. As shown in FIG. 3, sealant reservoir carrier 35 may be used to load the one or more packets into the foot of the photovoltaic mounting system or to replace or interchange the sealant reservoirs as needed.

Internal clamp plate 40 and/or other force spreader along with lag bolt through-hole 41 functions as a piston to compress sealant packet(s) 30 positioned under clamp plate 40 when an installer lags foot 22 into a roof surface by tightening lag bolt 10. In the embodiment of FIGS. 1- 8, sealant reservoir carrier 35 includes a tab 35a with a hole for engaging the carriage bolt 23-1 that attaches the upper foot assembly to the foot. One benefit of this configuration is that it provides a mechanism for holding the sealant packet(s) 30 in place until the mounting system is installed. This is shown in greater detail in FIG. 4.

It should be appreciated, however, that another connector or even an adhesive may be used to prevent sealant packet(s) 30 and clamp plate 40 from falling out of the foot or base portion 22. Also, in a preferred embodiment, the sealant injector assembly is pre-installed in the foot of bracket 20 before the installer receives the system for installation. However, in other embodiments, the sealant injector may be a standalone system usable with a variety of different photovoltaic mounting systems.

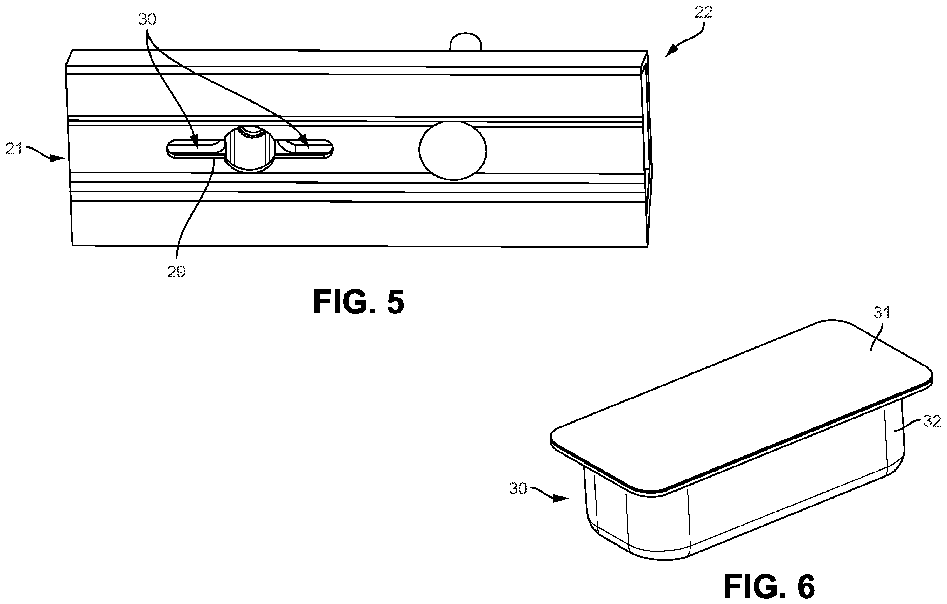

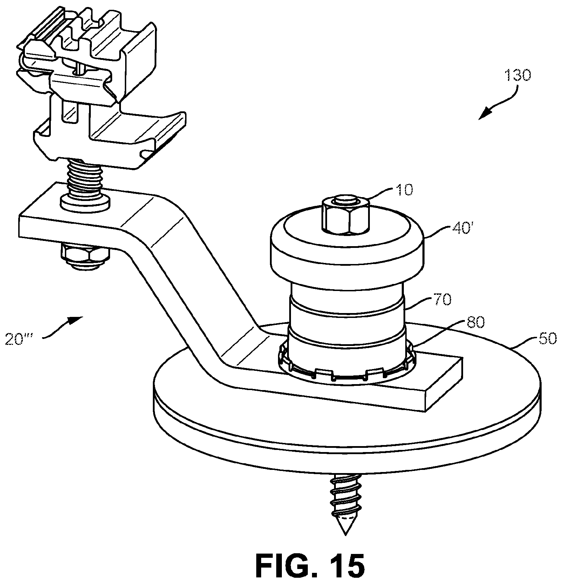

Regardless of the particular photovoltaic mounting system utilized with the lag bolt sealant injector system of the present invention, the roof-facing side of the foot or base portion 22 may include a sealant guide feature for controlling release of the flowable sealant during mounting. The sealant guide may be incorporated into the base portion and include an opening, such as slot 29, that encourages the directionally controlled flow of sealant material under the foot within channel 21, as shown for example in FIG. 5 or sealant guide may be a separate component, such as that shown in the embodiment of FIG. 15.

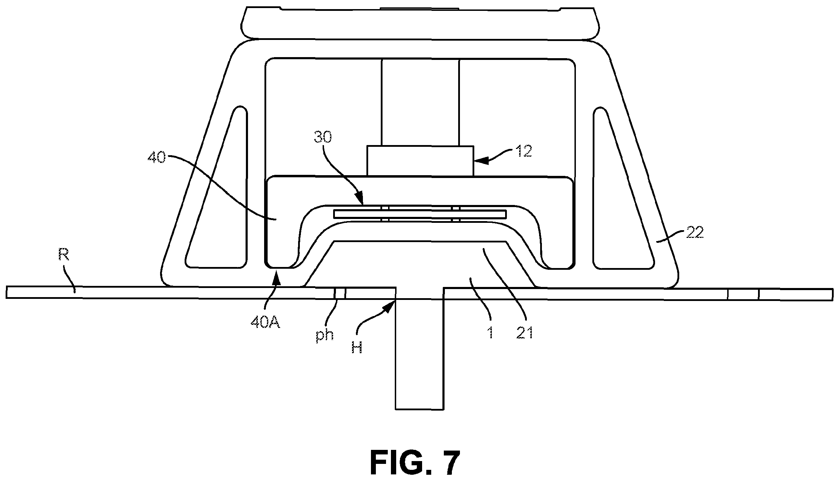

FIG. 6 illustrates one design for a collapsible sealant reservoir or packet 30. In this embodiment, the shell portion 32 is made of thin plastic, much like a food service packet, while the top portion (bottom facing when installed) is covered with a foil or other frangible or breakable material 31 that provides an airtight seal but is also easily punctured and/or ruptured, particularly when compressed by the action of a lag bolt pushing down on a piston. This effect is illustrated, for example, in FIG. 7. Torqueing down of lag bolt head 12 in turn pushes the clamp plate 40 down until a bottom foot 40A of the clamp plate 40 abuts against the interior of the base portion 22 , which, in turn, compresses plastic carrier 35 and injector packets 30 causing sealant to flow out under the bottom of the foot. In the example shown in FIGS. 1-7, foot or base portion 22 is formed with recessed gap or channel 21 to create a void for the flowable sealant 1 to flow into around lag bolt 10 so as to seal hole H in roof surface R through which lag bolt 10 extends as well as any adjacent pilot holes ph.

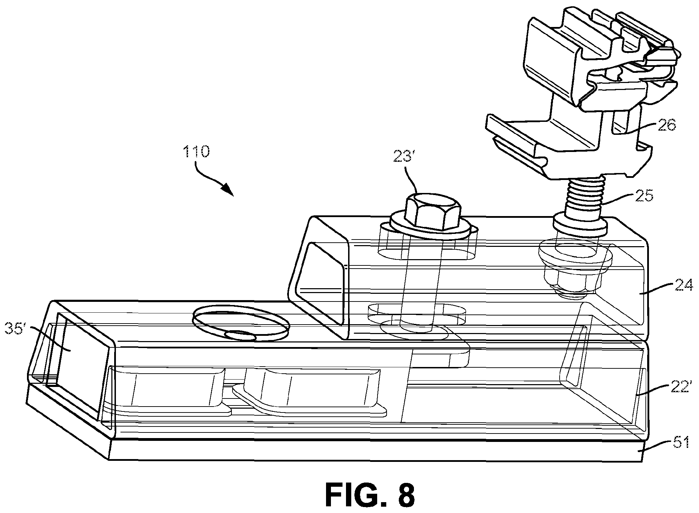

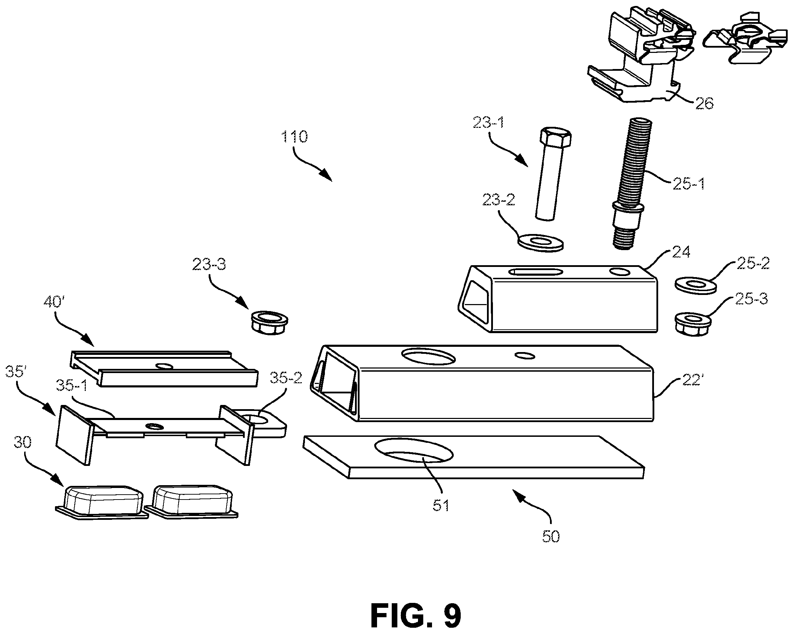

FIGS. 8 and 9 illustrate another exemplary photovoltaic mounting system 110 for use with a lag bolt sealant injector system according to another exemplary embodiment of the invention. The system shown in FIGS. 8 and 9 is similar to that of FIGS. 1-7 with a few notable differences. Referring to FIG. 9 in particular, an exploded view of photovoltaic mounting system 110 with lag bolt sealant injector system, in this exemplary embodiment, the upper foot assembly 24 attaches to foot or base portion 22' with bolt 23' that is fed from the top of the upper assembly 24, passing through the foot 22' and into the plastic carrier 35' which is holding a flange nut 23-3 in tab 35-2 of carrier 35'. The advantage of flange nut 23-3 in this embodiment is that the flange keeps the nut seated in plastic carrier 35' with the threads facing upwards so that the fastener can be dropped down through the upper foot and assembly and foot into the nut which engages the inside of base portion 22' (e.g lower main extrusion foot). This configuration holds the injector system in place while also joining the upper portion and base portion. Each of the upper and base portions may be formed as an extrusion, such as from a formable metal or metal alloy, for example, an Aluminum extrusion.

Also, instead of having a channel formed in the underside of the foot or base portion (e.g. lower main extrusion), system 110 shown in FIG. 9 includes a base portion 22' that is flat on the bottom but incorporates spacer 50, such as a foam pad with circular cutout 51 to accommodate a lag bolt as well a volume of sealant material around the lag bolt. Spacer 50 not only provides a space for the flowable sealant to flow into, but also contains any excess sealant to inhibit flow of sealant onto the roof surface. Use of spacer 50 can also protect the sealant from exposure to the elements (e.g. rain or UV exposure), which can extend the useful life of the sealant and ensure adequate sealing is maintained over time. A foam pad as spacer 50 may also be useful in applications where the base portion (e.g. lower main extrusion or foot) passes over an uneven seam between two subsequent courses of shingles by compensating for any uneven surface along the seam as the lag bolt is torqued down. Another feature of the embodiment shown in FIG. 9 is that clamp plate 40' is H-shaped rather than C-shaped which may enable clamp plate 40' to fit more snugly against plastic carrier 35 and prevent inadvertent movement of the sealant injection package within the base portion 22'. Otherwise, the mechanism of injecting sealant is essentially the same - by lagging down the foot to the roof surface with a lag bolt, the plate compresses the carrier and one or more sealant packets causing sealant to flow under the foot and around in the lag bolt in the opening pre-cut in the foam pad.

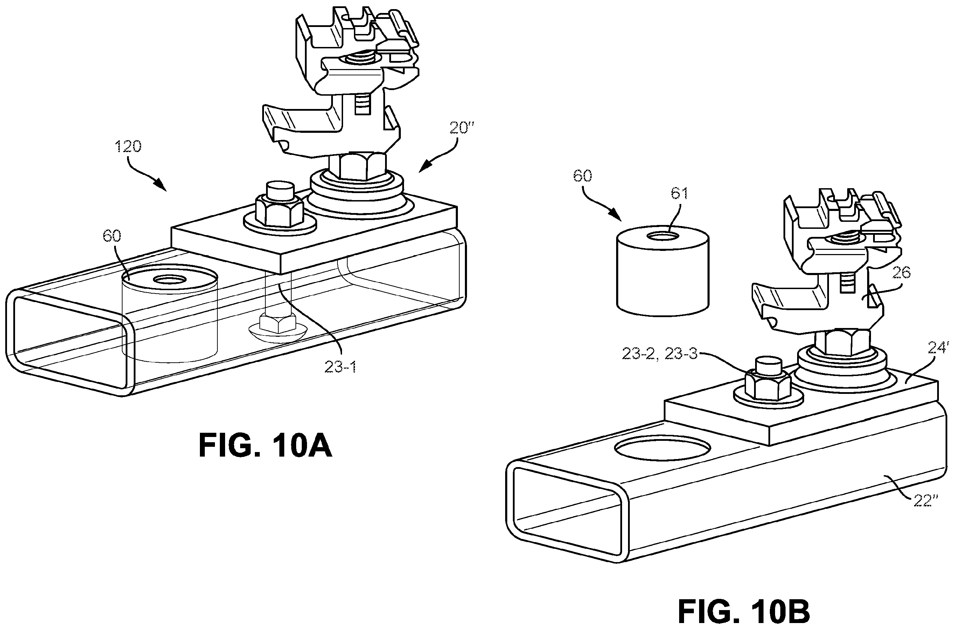

Referring now to FIGS. 10A-14, these figures illustrate exemplary lag bolt sealant injector system 120 that can be used with a different exemplary photovoltaic mounting system. Although the inventive principle of injecting sealant around a lag bolt through the action of torqueing down the lag bolt against a plunger which in turn compresses a sealant container is the same, the form factor of both the photovoltaic mounting system and fluid injector is somewhat different than that shown in FIGS. 1-9.

FIGS. 10A-10B are perspective views of tubular photovoltaic mounting system 120 that includes bracket mounting assembly 20" and piston-type sealant injector package 60, which is inserted into a circular opening formed in the foot or base portion 22" of bracket 20" through which the lag bolt is also inserted. In the image on the left, 10A, base portion 22" or foot has been made translucent so that piston-type sealant injector package 60 is visible seated within mounting system 120. FIG. 10B illustrates piston-type sealant injector package 60 removed from base portion 22" such as may occur when the package is being assembled, replaced or exchanged with another type of injector package or sealant.

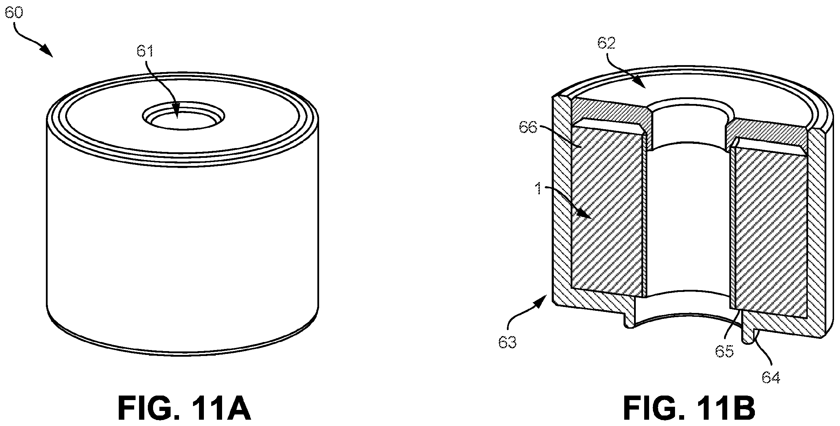

In this embodiment, bracket mounting system 20" comprises a foot or base portion 22" and upper assembly 24' including a two-sided photovoltaic module coupling device 26, such as the rock-it connector shown in FIGS. 10A-10B. It should be appreciated that other module coupling devices such as wrap-around or clamping style coupling devices as are known in the art may be used without departing from the spirit or scope of the invention. Upper assembly 24' and base portion 22" are joined by carriage bolt 23-1 that sits in the bottom of base portion 22" or foot facing up and penetrates a slot formed in the upper assembly 24' so that it can be secured with a washer 23-3 and locking nut 23-2. Piston-style sealant reservoir 60 is adapted to be received within a corresponding hole within base portion 22" and can be removed as shown in FIG. 10B such that the sealant reservoir can be exchange or replaced as needed. In some embodiments, the system is provided to a user with piston-style sealant reservoir 60 include in base portion 22", while in other embodiments piston-style sealant reservoirs 60 may be provided separately. The top surface of base portion 22" includes an enlarged hole through which the piston-style sealant reservoir 60 can be inserted and a smaller hole on a bottom surface through which the lag bolt extends into the roof surface and which interfaces with a sealant guide 64 on the underside of the piston-style sealant reservoir 60, as can be understood further be referring to FIGS. 11A-11B.

As seen in FIGS. 11A-14, in this embodiment, piston-type sealant injection package 60 is defined as a cylindrical structure with lag bolt through-hole 61 passing through the middle, with sealant contained within the ring surrounding the through-hole. While shown as cylindrical, it is appreciated that this concept can be defined in various other shapes, such as squares, polygons or various other shapes as desired.

FIG. 11B illustrates the internal structure of an example sealant injector package defined as a piston-type sealant injection package 60 according to this embodiment of the invention. Flowable sealant 1 is retained between the inner and outer wall of the cylinder with a piston formed by disc 62 on top that is capable of sliding down within the cylinder thereby releasing sealant 1 through the lag bolt through-hole 61 along the bottom. Sealant guide collar 64 at the bottom of the injector package fits inside the lag bolt opening formed in the bottom of foot or base portion 22", serving to hold the package in place and also to provide a flow path capped with a frangible portion defining flow path outlet 65 that allows the sealant to escape after the piston is compressed by the action of the lag bolt. Sealant guide collar 64 is adapted to control and direct flow of sealant from the reservoir between base portion 22" and the roof surface and around a portion of the lag bolt that protrudes through the roof surface. Sealant guide collar 64 may be defined as a lip that circumscribes the inner diameter of through-hole 61 of piston-style sealant injection package 60 and includes frangible portion flow path outlet 65 that breaks when sufficient pressure is applied to top plate 62 of the piston to collapse the collapsible cylindrical reservoir 66 containing flowable sealant 1. Sealant 1 is then directed through flow path outlet 65 along sealant guide collar 64 around the lag bolt so as to seal the hole in the roof surface through which the lag bolt extends as well as any adjacent pilot holes.

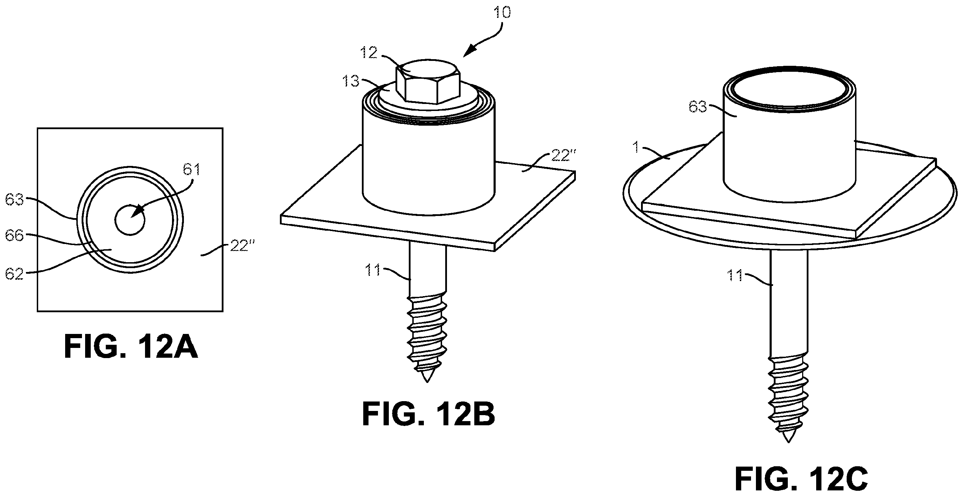

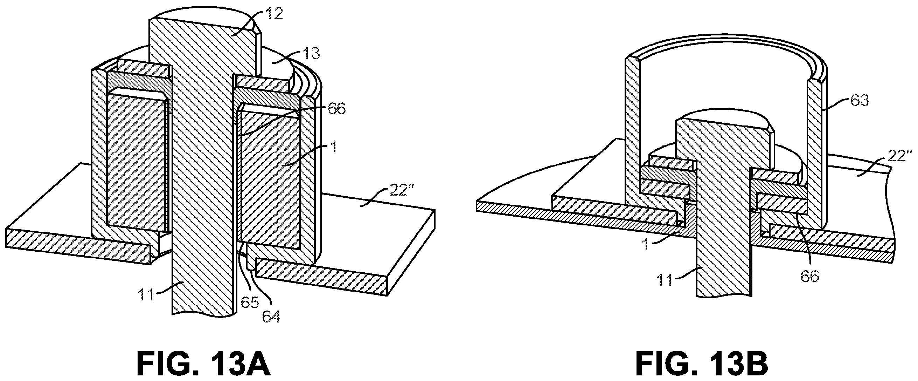

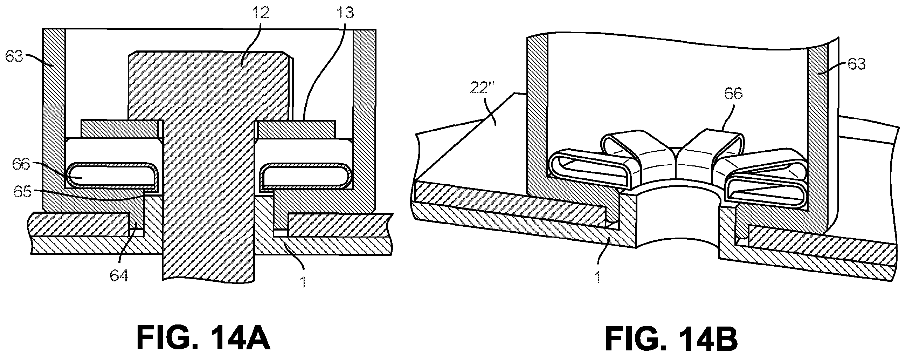

FIGS. 12A-12C illustrate several view of piston-style sealant injection package 60 during mounting of system 120. These views remove the majority of the structure of the photovoltaic mounting system 120 to emphasize the position and action of the piston-type sealant injector package 60. After a suitable pilot hole has been drilled, the lag bolt is simply dropped into the lag-bolt through hole 61 of the piston-type sealant injector package 60 and passes through the bottom of foot or base portion 22" and into the pre-drilled lag bolt hole. As shown in FIG. 12A, center hole 61 in piston-style sealant package 60 is open such that the user can see the pilot hole through package 60. As lag bolt 10 and, optionally washer 13, are torqued down, the washer and lag bolt head 12 push down on piston plate 62 which in turn pushes down on collapsible sealant reservoir 66 contained within package 60, collapsing the inner wall so that sealant 1 flows out through the sealant guide collar 64 at bottom and under the base or foot portion around the critical lag bolt hole in the roof surface. This is shown in even greater detail in the cross-sectional side views of FIGS. 13A-13B and 14A-14B. Before torqueing against the sealant injector, lag bolt head 12 and washer 13 sit on piston plate 62. As lag bolt 10 is further torqued, piston plate 62 maintains its shape but compresses the center tube or wall of cylindrical reservoir 66 out of the way, while at the same time squishing sealant 1 out of flow path outlet opening 65 along the sealant guide collar 64 around where lag bolt 10 protrudes through the roof surface.

As in previous embodiments, it may be desirable to form a channel or void on the underside of the roof-facing surface of the base portion of the mounting system that can be filled by the sealant without displacing the mounting system. Alternatively, a spacer, such as a foam pad or other structure, may be used to elevate the bracket mounting system 20" above the roof surface with a hole formed therein around the lag bolt opening as shown in the exemplary embodiment of FIGS. 8 and 9.

Referring now to FIGS. 15-22B, these figures illustrate exemplary sealant injection mounting system 130 having a simplified integral bracket 20‴ and tiered cylindrical sealant injector package 70, as shown in the perspective view of FIG. 15. System 130 also includes sealant guide 80 that secures sealant injector package 70 to bracket 20‴ and cylindrical clamping cap 40" disposed atop sealant injector package 70 that covers collapsed sealant injector package 70 after the lag bolt is torqued into the roof surface. System 130 further includes spacer disk 50 adapted for placement between bracket 20‴ and roof surface to surround the hole through which the lag bolt extends. Spacer disc 50 can include a recessed interior portion defining an enclosed space into which the sealant can flow around the lag bolt shaft along the penetration through the roof surface. Such a configuration inhibits flow of excess sealant onto the roof surface and avoids exposing the installer directly to the sealant during installation, thereby avoiding any potential mess and improving ease of installation while providing improved sealing of any of roof penetrations and subsequent protection of cured sealant.

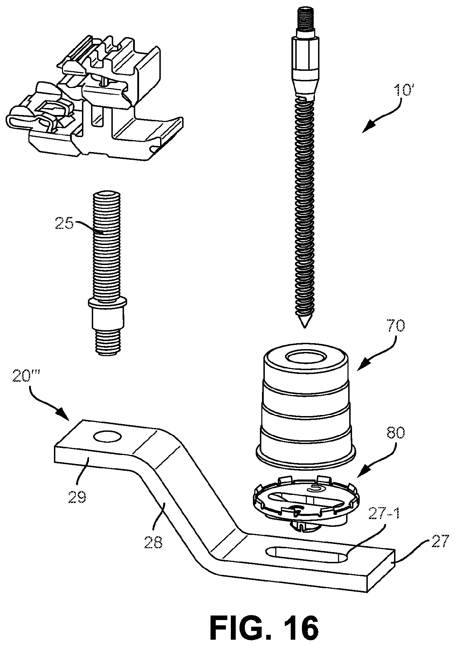

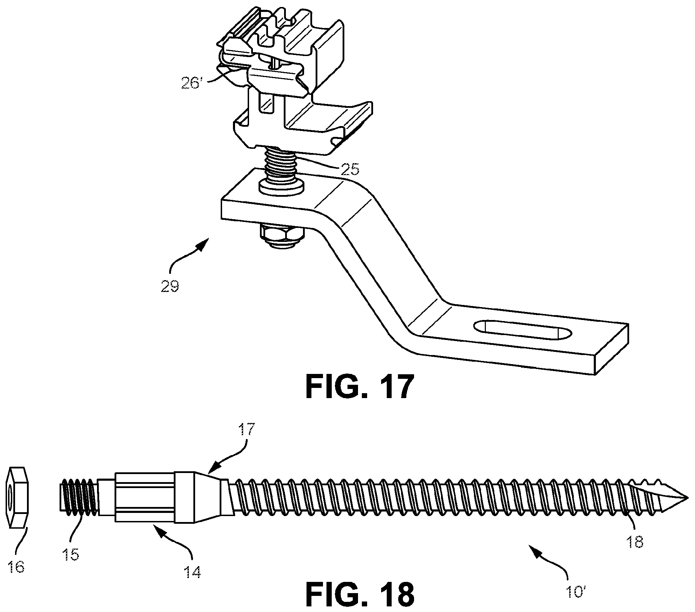

As can be seen in the exploded view of FIG. 16, integral bracket 20‴ includes flattened foot or base portion 27, angled bent-up portion 28 that protrudes away from the roof surface when base portion 27 is mounted on the roof surface, and flattened upper support portion 29 for supporting the photovoltaic panel or associated coupling component. Foot or base portion 27 includes slot 27-1 for passage of lag bolt 10' into the roof surface, and support portion 29 includes through hole 29-1 for passage of fastener 25, such as a bolt, for securing photovoltaic coupling feature 26' to bracket 20‴, as shown in FIG. 17. Such coupling features can be adapted for coupling with a portion of a photovoltaic panel or associated support component (e.g. support track) and can include the rock-it style connectors shown in FIGS. 1-3 or a different type of photovoltaic module coupling device such as a wrap-around or clamping style connector as is known in the art.

In this embodiment, the bracket assembly is defined as a single integral component, such a bent-up bar with flatted base portion and flattened upper portion. This configuration allows for a smaller leveling foot that is narrower and lighter than the bracket assemblies formed of one or more extruded and/or stamped portions, such as those described above. In some embodiments, the integral bracket is formed of a metal bar having a rectangular cross-section. The metal bar may have a width between about 1 cm and 5 cm in width and between 5 mm to 20 mm in thickness, such as about 6 mm or about 8 mm in thickness. The base portion can be secured to the roof surface with a single lag bolt, such as any of those described herein.

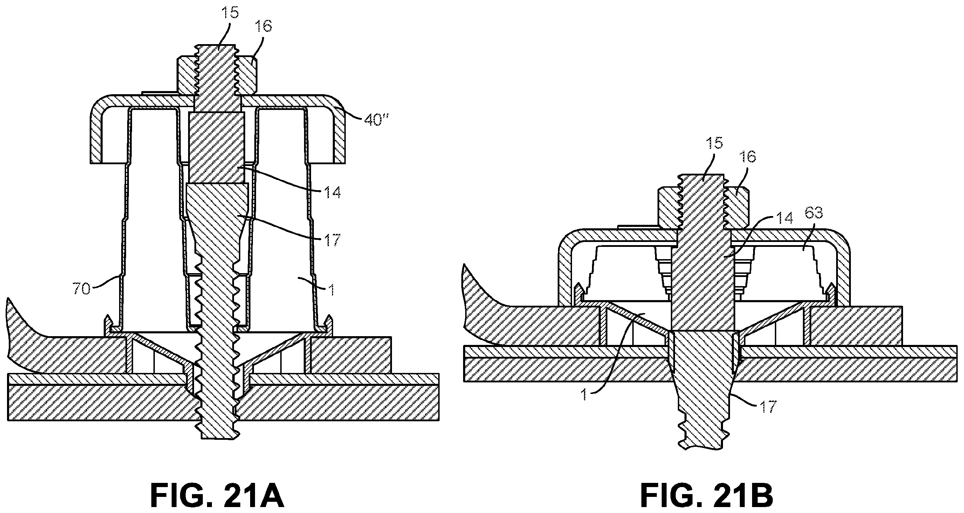

In some embodiments, system 130 utilizes a specialized fastener that allows integral bracket 20" to be removed after mounting to the roof surface without removing the fastener and without disturbing the cured sealant disposed where the fastener penetrates the roof surface. As shown in FIG. 18, such a fastener may be configured as a specialized lag bolt 10' that lacks an enlarged proximal head, such as that shown in the lag bolt 10 of FIG. 1. Rather, specialized lag bolt 10' includes threaded portions at both a proximal and distal ends, 15 and 18 respectively, such that a nut 16 can be threaded onto the proximal end to facilitate torqueing of lag bolt 10' into the roof surface. Such a fastener is sometimes referred to in the art as a hanger bolt. A washer can also be used beneath nut 16. Lag bolt 10' can also include an intermediate portion 14 (e.g. polygonal, hexagonal portion) between proximal and distal ends that allows for subsequent removal of lag bolt 10' from the roof surface if desired. In some embodiments, lag bolt 10' can further include distally tapered portion 17 near the proximal end, typically distal of the intermediate portion 14. Distally tapered portion 17 is adapted to facilitate breaking of the sealant guide and to bisect the flowable sealant within the collapsible reservoir of the sealant injection package when driven or torqued into the roof surface to facilitate directionally controlled release of flowable sealant 1 through sealant guide 80, as shown for example in FIGS. 21A-21B. Distally tapered portion 17 may also include a stop surface (not shown), such as may be defined as a ridge or collar, that is disposed near a proximal end of the bolt so as to limit the depth at to which lag bolt 10' penetrates the roof surface. While these aspects are described for use with mounting system 130, it is appreciated that any of these features could be applied to a fastener, such as a lag bolt, and adapted for use with any of the other mounting systems described herein or variations thereof.

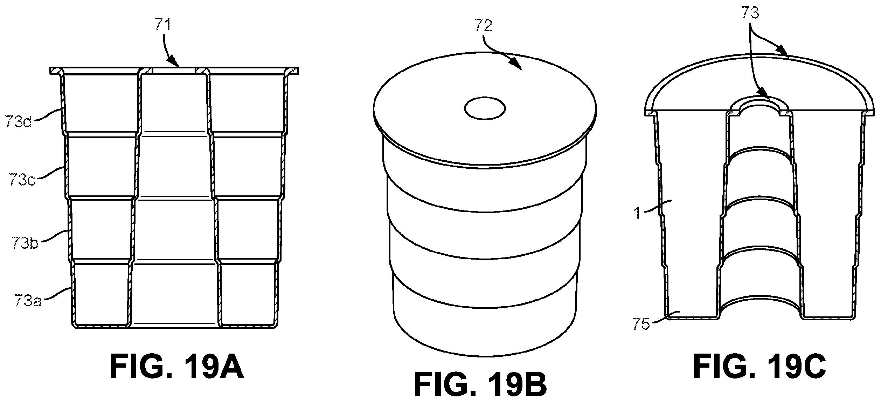

FIGS. 19A-19C illustrate detail views of injection sealant package 70 of the system shown in FIG. 15. Sealant injection package 70 includes a collapsible sealant reservoir 75 containing flowable sealant 1. As shown, package 70 is cylindrical and extends about central tubular passageway 71 extending longitudinally through cylindrical package 70 that allows for passage of a fastener, such as a lag bolt or hanger bolt, therethrough. Injection sealant package 70 includes a tiered outer shell 73 that includes multiple tiers 73a, 73b, 73c, 73d that are stepped or tapered so as to nest within each other and encourage organized collapsed of sealant reservoir 75 when the package is compressed by torqueing of the fastener extending therethrough. The bottom of package 70 (shown facing upwards) includes a frangible portion 72 that breaks apart when the package is compressed thereby allowing directional release of sealant therethrough. Frangible portion 72 can include a readily breakable layer or film, such as a foil lid, that may be sealed to the bottom edge of the outer shell, such as with ultrasonic seals, adhesive or other sealing means. Sealant package 70 is oriented relative the bracket 22" with the bottom of the package facing downwards towards the roof surface so that sealant 1 is directed between the bracket and the roof surface and around the lag bolt shaft where the bolt penetrates the roof surface. The outer shell of sealant injection package 70 can be formed of a rigid or semi-rigid plastic that resists collapse during handling and shipment of sealant injection package 70, but the joints between tiered portions are weak enough to allow collapse of the tiered portions when package 70 is compressed in an axial direction with sufficient force to torque the fastener into the roof surface during mounting. In one aspect, the package 70 may be configured with greater lateral strength than axial strength so as to avoid inadvertent collapse of the reservoir during handling and shipment and facilitate collapse and release of the sealant when properly oriented in the bracket assembly as described and the fastener is torqued into the roof surface.

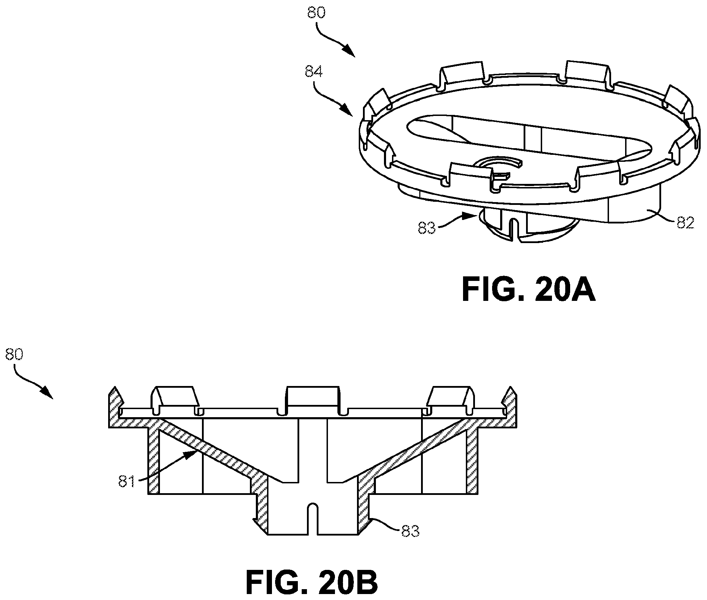

FIGS. 20A-20B illustrate a removable sealant guide 80 adapted for use with injection sealant package 70, as shown in the embodiment in FIG. 15. As shown, sealant guide 80 includes an alignment feature 82 protruding from the bottom surface that interfaces with a corresponding feature within the base portion of the bracket. In this embodiment, the alignment feature 82 is an oblong protrusion that is receiving with a similarly shaped slot within the base portion through which the lag bolt also extends during mounting. Sealant guide 80 further includes coupling feature 84 disposed along the top surface that is adapted for releasably coupling with a bottom surface of sealant injection package 70. In this embodiment, coupling feature 84 includes a snap-fit type feature that resiliently snaps onto an outer ridge along the bottom surface of cylindrical sealant package 70. Sealant guide 80 may also include a lower coupling feature 83 for coupling with an underside of bracket 22". These features, in combination, secure sealant guide 80 to the bracket and secures sealant package 70 to sealant guide 80 so that a flow of sealant from the collapsible reservoir is released through sealant flow path 81 defined through sealant guide 80. In this embodiment, system 130 further includes a spacer 50', such as a circular foam pad, that circumscribes the hole through which the lag bolt extends and defines a space in which the sealant can flow between the bracket and roof surface and around the lag bolt along the roof penetration. Sealant flow path 81 can be adapted with one or more chutes or ramped surfaces so as to a flow of sealant directionally released from the sealant package to a desired area between bracket 22" and roof surface.

In some embodiments, sealant guide 80 is designed to break apart once the lag or hanger bolt is installed to facilitate flow of sealant through the guide. This action may be effected by use of bolt 10' having a distally tapered portion 17 that engages sealant guide 80 when torqued into the roof surface. This is shown, for example, in FIGS. 21A-21B. FIG. 21A shows system 130 assembled as described above before mounting to the roof surface, the distal tip of lag bolt 10' extending into a hole drilled into the roof surface with flowable sealant 1 contained within sealant injection package 70. FIG. 21B shows system 130 after installation by torqueing lag bolt 10' into the roof surface, the tapered portion having broken apart sealant guide 80 and bisecting the sealant or adhesive facilitating controlled flow of sealant between the bracket and roof surface about the roof penetration by the lag bolt.

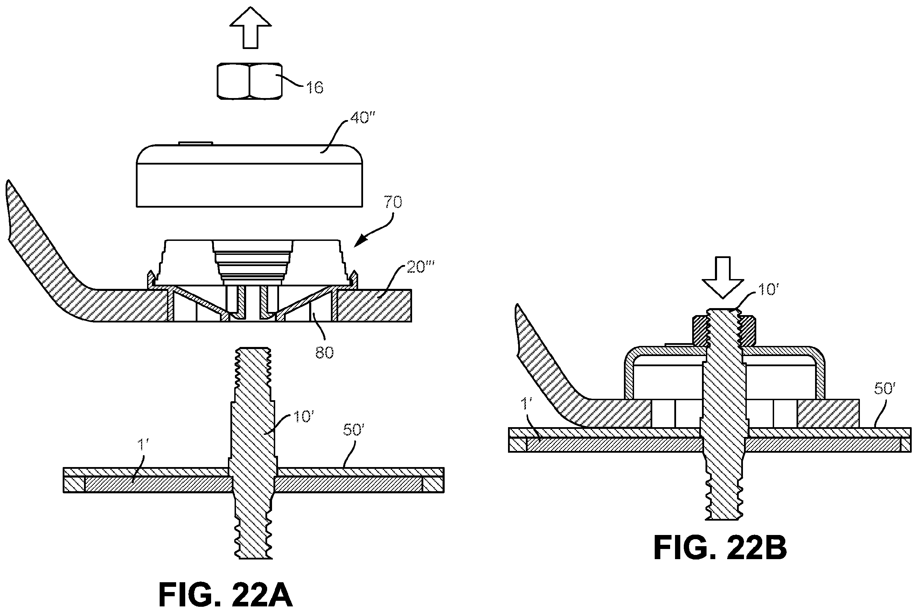

In some embodiments, system 130 allows for removal of the mounting bracket after installation with the sealant injection package described above, as can be seen for example in FIG. 22A. In this embodiment, by removing nut 16 from the proximal threaded portion of the specialized lag bolt 10', compression cap 40", the compressed sealant injector 70 and the bracket can be removed and discarded while lag bolt 10' remains installed within the roof surface, the sealant under the puck or spacer 50' left undisturbed. A new bracket, of the same or different type, can then be installed over the installed lag bolt 10', which remains sealed with cured sealant 1' and spacer disc 50' from the previous installation, as can be seen for example in FIG. 22B. This configuration is advantageous as it allows the mounting bracket to be replaced if breakage or fatigue of the mounting bracket occurs, or if a different type of mounting bracket is desired after the original installation. This is particularly advantageous as it allows for replacement or changing of mounting brackets without requiring additional penetrations through the roof surface and while allowing the sealing of the original roof penetrations to remain intact.

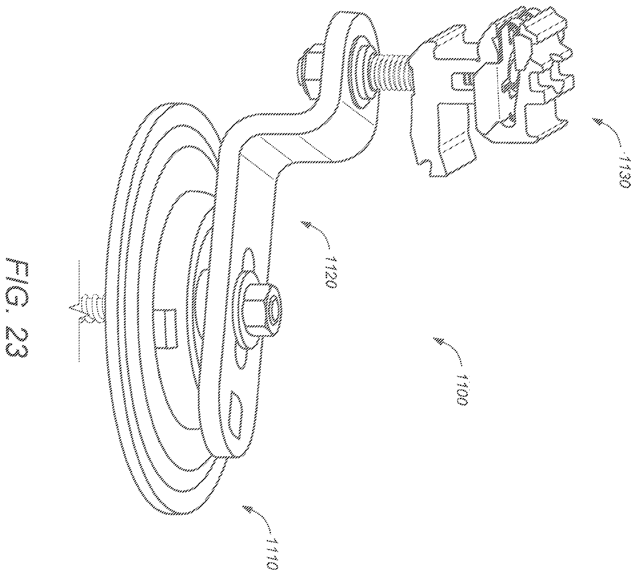

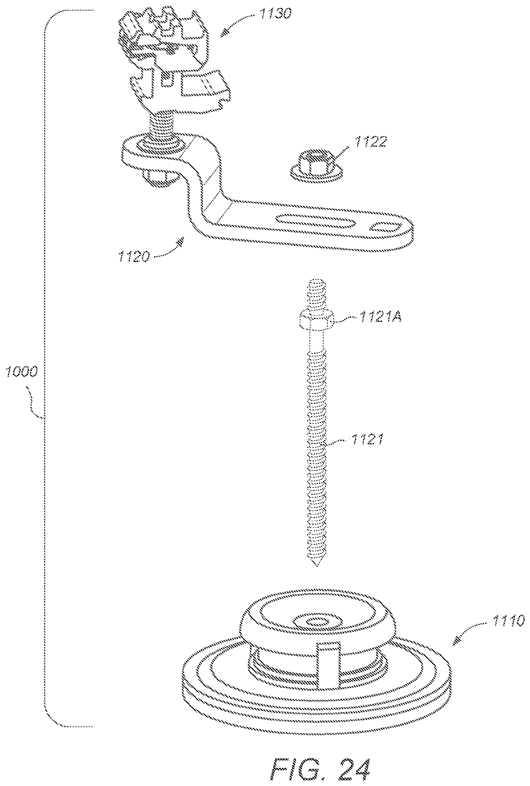

Referring now to FIGS. 23-30, these Figures show various views of a photovoltaic mounting system according to various embodiments of the invention. As shown in FIG. 23, mounting system 1100 includes a base portion 1110, mounting bracket 1120 and photovoltaic module coupling device 1130. As can be seen in the exploded view of FIG. 24, a fastener, such as hanger bolt 1121, is used to fasten mounting bracket 1120 to base portion 1110 and to mount base portion 1110 to the roof surface. Bolt head 1121a engages a top surface of base portion 1110 to mount onto the roof surface and mounting bracket 1120 is secured to base portion 1110 by nut 1112 threaded onto the upper threaded region of hanger bolt 1121.

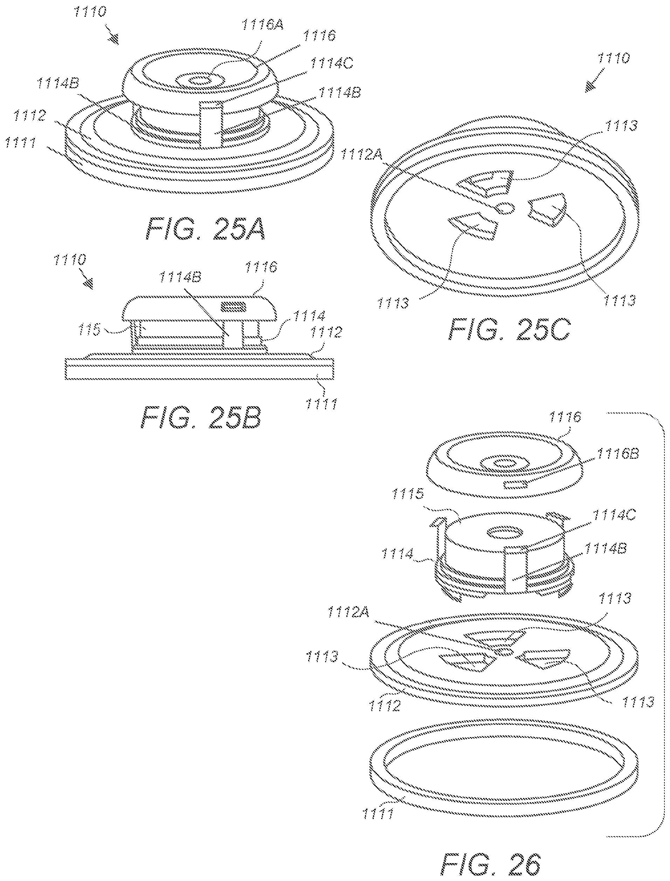

As shown in FIGS. 25A-25C, base portion 1110 includes sealant cartridge 1115 that sits between compressing plate 1116 and base 1112. Compressing plate 1116 may take the form of a bell housing or simply be a plate or can be formed in any suitable shape for pressing against cartridge 1115 so as to release the flowable sealant thereby forming the chemical flashing. Base 1112 can be formed in a circular, puck shape, although it is appreciated that base 1112 can also be formed in various other non-circular shapes as well. In some embodiments, base 1112 is formed of a durable, rigid, corrosion resistant material, for example a metal alloy, such as steel, aluminum or hard plastic. Sealant cartridge 1115 contains a flowable sealant that is released upon mounting of base assembly 1110 to form the chemical flashing. In various embodiments, base 1112 includes a recess on its bottom, roof-facing side, that circumscribes its perimeter and that is dimensioned to receive the top of sealant ring 1111 to keep sealant material captured under base portion 1110 when the assembly is attached to a roof or other support surface. Sealant ring 1111 can be attached to base 1112 by any suitable means, for example a pressure-sensitive adhesive. As shown in FIGS. 25A-26, base portion 1110 can be defined as a stacked assembly, although it is appreciated that in various other embodiments some or all of the components of the assembly can be integrated.

As shown in FIGS. 25A-25C and 26, base 1112 can include center hole 1113 for passage of a mechanical fastener and apertures 1113A to allow extrusion of the flowable sealant therethrough. Apertures 1113A may be distributed around center hole 1113 to allow for even distribution of sealant material under base 1112. In this embodiment, apertures 1113A are distributed radially about center hole 1113 to provide more uniform distribution of sealant about the roof penetration that the fastener extends through. While three apertures are shown here, each defined in a trapezoidal-shape, it is appreciated that the apertures could be formed in various differing shapes and numbers. For example, apertures 1113A can be formed also as circular holes or could be formed as a single opening extending partly or entirely about center hole 1113.

As can be seen in FIG. 26, cartridge 1115 comprises a cylindrical-shaped structure with a center through-hole 1115A. Cartridge 1115 can be formed of any suitable material, for example plastic, that can contain a flowable sealant in a sealed state. In various embodiments, the housing of cartridge 1115 can be formed, partly or entirely, of a material that can be crushed or collapsed so as to allow release of the flowable sealant upon mounting of base portion 1110 to the roof. In various embodiments, one side of cartridge 1115 facing towards base 1112 may be covered with foil or other material that is strong enough to provide an airtight seal to prevent the sealant form curing but breakable enough to easily penetrated or ruptured during installation to release the sealant. A plastic bracket such as sealant carrier or guide 114 may surround cartridge 1115, keep center-hole 1115A of cartridge 1115 over center opening 1113 in base 1112, and also function as mechanical fastener to connect cartridge 1115 and compressing plate 1116 to base 1112 to form a single assembly.

In various embodiments, sealant guide 1114 includes one or more coupling features that act as mechanical fasteners to couple guide 1114 to one or both of compressing plate 1116 and base 1112 with sealant cartridge 1115 secured therebetween. In these embodiments, the one or more coupling features are defined as one or more tabs, typically a series of tabs distributed about the periphery of guide 1114. As can be in seen in FIG. 26, guide 1114 include multiple tabs 1114B that extend upwards toward compressing plate 1116. Each tab can include a retention feature 14C on a distal end thereof. Retention feature 14C can be defined as an inwardly bent or curved end adapted to engage a top, outer surface of compressing plate 1116 sufficiently to couple guide 1114 with compressing plate 1116. In some embodiments, tabs 1114B are adapted to receive and fit over an outer periphery of compressing plate 1116 and engage an outer surface, such as shown in FIG. 25A. Tabs 1114B are formed of a material with sufficient rigidity and strength to resiliently deflect to receive compressing plate 1116 and apply enough tension to securely couple compressing plate 1116 to guide 1114 with sealant cartridge 1115 held in between. In some embodiments, tabs 1114B are adapted to interface with corresponding retention features 1116B within compressing plate 1116. In this embodiment, the corresponding retention features 1116B are defined as square openings dimensioned to receive the distal retention feature of tabs 1114B. It is appreciated that the assembly can be designed so that tabs 1114B interface with the corresponding retention features 1116B from outside the periphery, as shown in FIG. 25A, or from inside the periphery, as shown in FIG. 25B. Distal retention features 1114C can be defined as wedge-shaped portions that are positioned so that an angled portion deflects tabs 1114B when compressing plate 1116 is pressed onto guide 1114 until the wedge-shaped portion is received into the square openings, such as in a snap-fit type coupling. In such embodiments, the wedge-shaped portion can be dimensioned to extend beyond the square openings when guide 1114 is snap-fit coupled to compressing plate 1116 to allow a user to disassemble base portion assembly 1110 by pressing on the portions of tabs 1114B protruding from compressing plate 1116.

In various embodiments, guide 1114 can further include coupling features for securing base 1112 to guide 1114. As shown in FIG. 26, such coupling features can be defined as multiple tabs 1114A distributed along the periphery of guide and extending towards base 1112. Similar to the mechanism described above with respect to tabs 1114B, tabs 1114A are shaped so as to be resiliently received within corresponding retention features within base 1112. In this embodiment, the corresponding retention features are also apertures 1113A through which sealant is extruded. As can be seen in FIG. 26, tabs 1114A are positioned to be received along an outside edge of each of apertures 1113A and include distal retention feature 1114D defined as a wedge-shaped portion that facilitates lateral deflection of tabs 1114-A until distal retention feature 14D is received along the lower edge of apertures 113. While in this embodiment, the corresponding features of base 112 are integrated with apertures 1113A, it is appreciated that base 1112 could include separate retention features, for example a series of openings similar to those in compressing plate 1116.

In any of the embodiments herein, it is appreciated that one or more retention features, such as tabs 1114A and 1114B, can be used to secure the elements of base portion 1110 within an assembly. Such retention features can be adapted to permanently secure the components together or to releasably secure the components together so as to allow an end-used to disassemble base portion if needed. While retention features 1116B are shown as square or rectangular openings and tabs 1114A and 1114B are shown as having rectangular cross-sections, it is appreciated that various other shapes could be used in keeping with retention mechanisms described above.

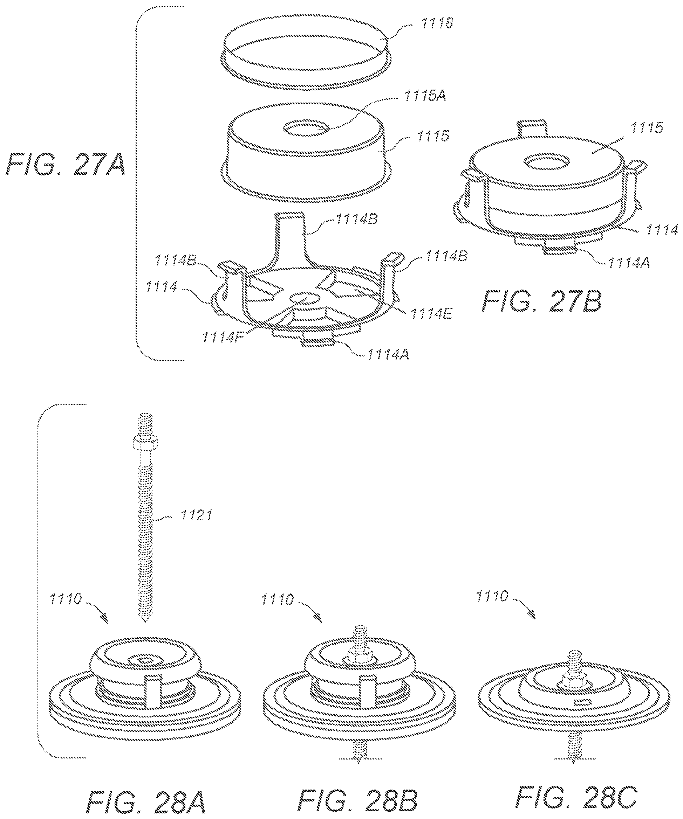

As shown for example in FIG. 27, guide base 1114 may include a set of openings 1114E which overlap or match up with apertures 1113A of base 112 so that flowable sealant flows through both openings 1114E and base 1113A when cartridge 1115 is compressed. Guide 1114 can further include a set of tabs 1114A on the base-facing side that detachably couple guide base 1114 to base 1112. Also, as seen in FIG. 27, base assembly can further include reinforcing ring 1118, which is a rigid ring adapted to fit around cartridge 1115 when fitted within guide base 1114. Reinforcing ring 1118 is made of a suitable material and dimension to provide resistance to the lateral flow of sealant through the sidewall of cartridge 1115 when cartridge 1115 is compressed against base 1112 otherwise known as a "blow-out." As seen here, reinforcing ring extends only partly along the side to allow cartridge to be compressed to about the height dimension of the reinforcing ring.

In such embodiments, guide base 1114 may also include a set of upward-facing tabs 1114B, that face away from base 1112, that engage a compressing member such as compressing plate 1116. In various embodiments, compressing plate 1116 is a disc-shaped structure with a lip surrounding the outer edge that curves downward toward base 1112. Compressing plate 1116 may be made of a rigid material such as galvanized steel, stainless steel, aluminum, etc., that is strong enough to compress cartridge 1115 without distorting. In various embodiments, compressing plate can be formed in a shape having a convex top surface on a side facing away from the roof surface, which inhibits accumulation of rain and/or debris when mounted on the roof surface.

Compressing plate 1116 may include one or more retention features (e.g. recesses, openings) positioned to match with location of tabs 1114B formed on guide base 1114 so that compressing plate 1116 will remain mechanically coupled to the entire assembly, for ease of transport and installation. Housing of compressing plate 1116 includes central opening 1116A which is co-located with opening 1115A in cartridge 1115 and opening 1112A in base 1112.

FIGS. 28A-28C illustrate the process of mounting an exemplary base portion assembly 1110 to a roof surface using a hanger bolt 1121 as the mechanical fastener. Base assembly 1110 is installed by first drilling a pilot hole into a roof surface, for example, directly through any existing shingles. After the pilot hole has been drilled, base assembly 1110 may be positioned over the pilot hole, as shown in FIG. 28A and hanger bolt 1121 inserted through aperture 1116A in compressing plate 1116, aperture 1115A in cartridge 1115, through guide base 1114 and through aperture 1112A in base 1112, and into the pilot hole. Then, using an impact driver or other tool, torque is applied to hanger bolt 1121 until head 1121A engages the top surface of compressing plate 1116, which in turn begins to crush cartridge 1115. As torque is continuously applied, compressing plate 1116 continued to crush cartridge 1115 until the bottom of the lip of the outer periphery of compressing plate 1116 rests against the top surface of base 1112. Tabs 1114A (not shown) can be deflected outward or break off as the compressing plate 1116 moves downward.

During this torqueing process, sealant will be forced through the openings in the bottom of guide base 1114, through apertures 1113 in base 1112 and underneath to seal around lag bolt 1121 and any missed drill holes that are also within the void defined by base 1112 and sealant ring 1111.

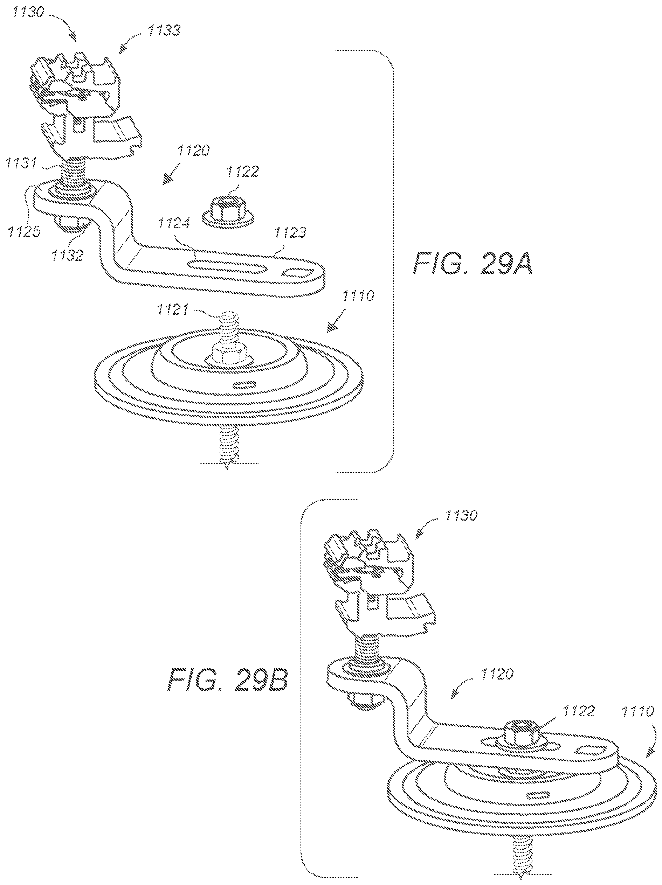

FIGS. 29A and 29B show an exploded view and an assembled view of a photovoltaic mounting bracket 1120 and base assembly 1110. In various embodiments, bracket 1120 includes an opening, such as slot 1124, through which the top of lag bolt 1121 passes when assembled. Nut 1122 rests against top surface 1123 of bracket 1120 so as to hold bracket 1120 against base assembly 1110. Slot 1124 allows mounting bracket 1120 to be rotated 360 degrees about lag bolt 1121 as well as moved laterally along the primary axis of bracket 1120. Such a configuration allows for adjustment of mounting bracket as needed for a position of a photovoltaic module mounted on the roof surface.

Bracket 1120 can further include raised portion 1125 that supports photovoltaic coupling device 1130. An advantage of this design is that raised portion 1125 provides extra clearance for mounting hardware supporting PV coupling device 1130, such as, for example, nut 1122. In various embodiments, PV coupling device 1130 is supported above raised portion 1125 by a threaded stud such as stud 1131. An advantage of this is, is that adjustments can be made to the height of PV module coupling device 1130 and base assembly 1110 (and by extension between device 1130 and the roof surface) to compensate for an uneven roof surface.

As shown in the figures, PV module coupling device 1130 can include a rock-it connector such as connector 1133 manufactured by SolarCity Corp. Such a coupling device is described and illustrated, for example, in commonly assigned U.S. Patent Application No. 14/615,320, Publication No. 2015/0155823-A1, the disclosure of which is herein incorporated by reference in its entirety. However, it should be appreciated that a clamping or wrap-around style connector, or other types of connectors, may be utilized with various embodiments with departing from the spirit or scope of the invention.

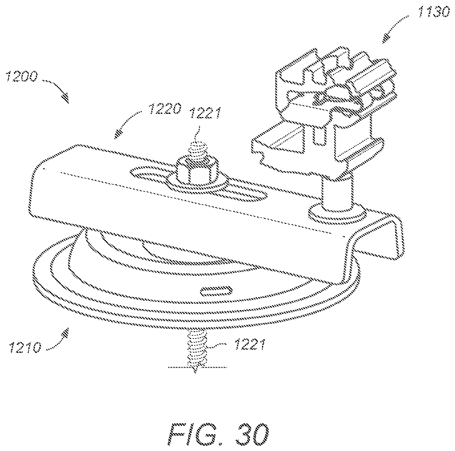

Referring now to FIGS. 30-35, these figures show a photovoltaic module mounting system adapted to form a chemical flashing according to another embodiment of the invention. System 1200 employs a somewhat different photovoltaic mounting bracket, as shown in FIGS. 23-29, that still forms a chemical flashing that is released by the action of a hanger or lag bolt being torqued down to the roof to securely attach the base portion, in this case assembly 1210, to the roof surface.

As shown in FIG. 30, system 1200 includes base assembly 1210, mounting bracket 1220 and PV module coupling device 1130. Coupling device 1130 is substantially the same as the coupling device shown in FIGS. 23-29. As in the case of that embodiment, system 1200 may include a clamping or wrap-around coupling device in place of rock-it connector 1130. Such variations are with in the spirit and scope of the invention.

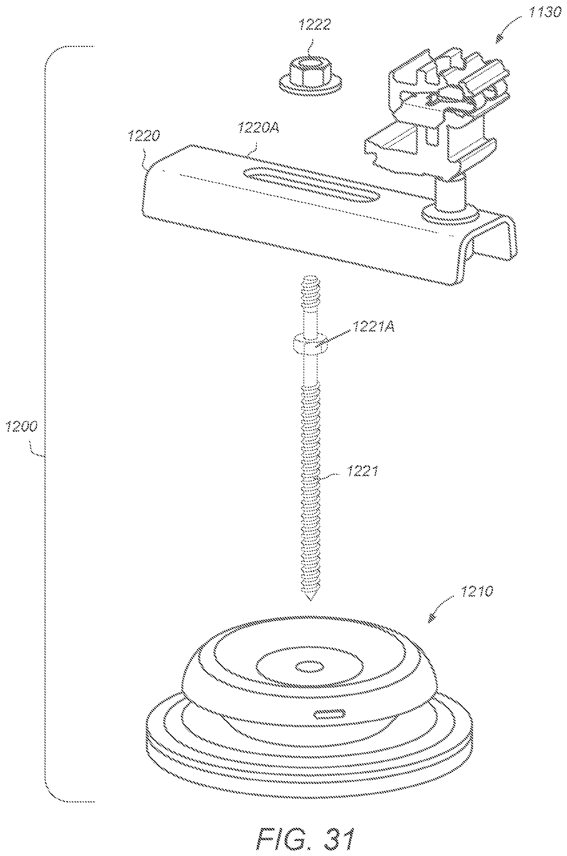

As can be understood by referring to the partly exploded view in FIG. 31, hanger bolt 1221 is inserted through base assembly 1210 to secure it to the roof surface. Then, mounting bracket or foot assembly 1220 is placed on top of base assembly 1210 via slot 1220A. The top portion of hanger bolt 1221 may pass through slot 1220A and then receives nut 1222, which is torqued down to fasten foot assembly 1220 to base assembly 1210. Slot 1220A allows the location of PV module coupling device 1130 to be moved with respect to hanger bolt 1221, both laterally and rotationally. After mounting is complete, the system appears as shown in FIG. 30.

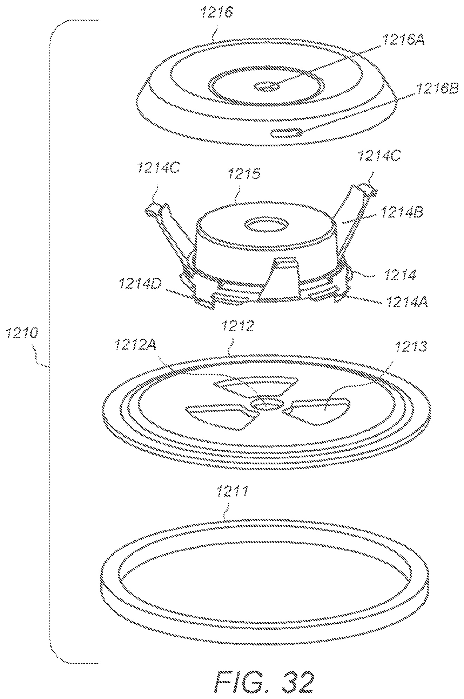

FIG. 32 is a partially exploded view showing the individual components of base assembly 1210, which include, assembled from bottom to top, sealant ring 1211, base 1212, sealant guide 1214, sealant cartridge 1215 and compressing plate 1216. Each of these components of base assembly 1210 and their relative position is described in further detail below.

Base 1212 sits on top of sealant ring 1211. Base 1212 is preferably made of a rigid, corrosion resistant material, for example a metal alloy, such as steel, aluminum or hard plastic. Base 1212 can further include a recess on its underside (e.g., roof-facing side) that is dimensioned to receive sealant ring 1211, which helps prevent leakage of sealant out from the seam between ring 1211 and base 1212. Sealant ring 1211 can be made of foam or other deformable material so as to define a perimeter under base assembly 1210 that contains the flowable sealant as it is extruded through any apertures 1212A in base 1212. Sealant ring 1211 can also define a cavity between the bottom of base 1212 and the roof surface, which defines the space in which the chemical flashing is formed. Sealant ring can be releasably or fixedly attached to the underside of base 1212 by any suitable means, for example a pressure-sensitive adhesive.

As shown, base 1212 further includes one or more holes 1212A for receiving a mechanical faster such as a lag bolt or hanger bolt. As shown, hole 1212A is in the center, however, it should be appreciated that if more than one fastener is used, there may be multiple holes distributed around base 1212. Base 1212 further includes one or more apertures 1213 for guiding flow of sealant material into the void defined by sealant ring 1211, base 1212 and the roof and around the lag bolt or hanger bolt penetrating into the roof, thereby forming the chemical flashing around the roof penetration.

Next, in this assembly 1210 is sealant cartridge 1215 and sealant carrier or guide 1214. Sealant guide 1214 sits on base 1212 and may include one or more coupling features, such as downward-facing tabs 1214A with distal retention features 1214D, which detachably couple guide 1214 to base 1212 by a mechanism the same or similar to that described in the embodiment of FIGS. 23-29. Guide 1214 can further include one or more coupling features, such as upward-facing tabs 1214B that serve to maintain the position of sealant cartridge 1215 and also to connect it to compressing plate 1216 by distal retention features 1214B. Compressing plate 1216 can include a set of corresponding retention features, such as openings 1216A, that receive tabs retention features 1214C of tabs 1214B to keep assembly 1210 together before installation. Such coupling features allows the base portion assembly 1210 to remain as an assembly without any need for any additional fasteners, such as hangar bolt, extending therethrough. Though not shown in FIG. 32, sealant cartridge 1215 and guide base 1214 may also include a reinforcing ring, such as described previously. Such a reinforcing ring helps keep cartridge 1215 seated on guide base 1214 and to prevent against blow-outs when compressing plate 1216 is compressed down towards base 1212, thereby causing sealant to be dispensed through apertures 1213 and under base 1212 around bolt 1221 and forming the chemical flashing.

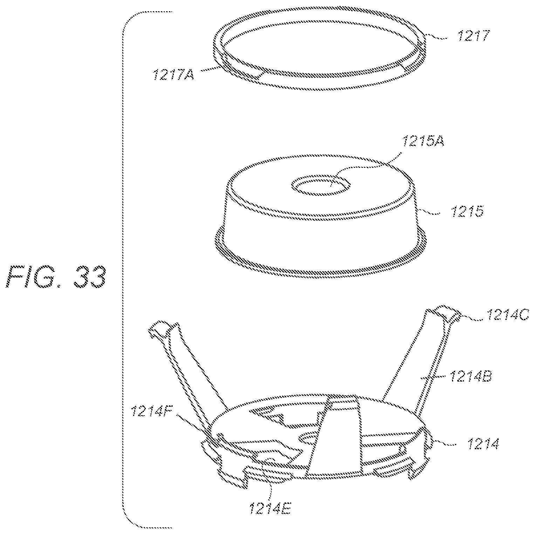

FIG. 33 shows another exemplary reinforcing ring 1217. Reinforcing ring 1217 is preferably though not necessarily short enough to allow compressing plate 1216 to compress against base 1212 without interfering but tall enough to substantially prevent blow outs. Ring 1217 can further include orientating and/or coupling features, such as recesses 1217A, which fit into corresponding protrusions 1214E on guide 1214. These features can be adapted to fit together in a snap-fit type coupling so as to secure retaining ring 1217A with guide 1214. Guide 1214 further includes openings 1214E that align with corresponding apertures 1213 in base 1212 through which sealant flows from sealant cartridge 1215.

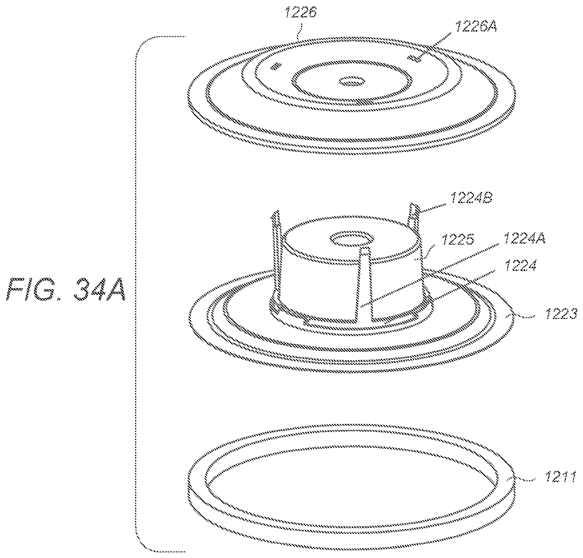

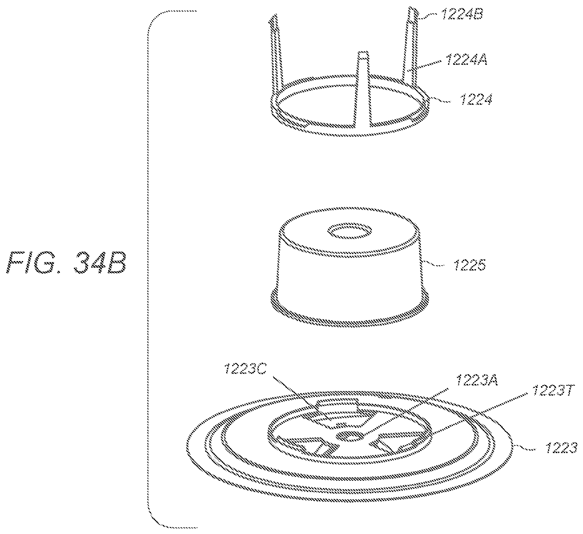

Turning now to FIGS. 34A and 34B, these figures show alternative embodiments of base assembly 1210 in which guide 1224 and base 1223 are slightly different from guide 1214 and base 1212. Guide 1224 includes a plurality of upward-facing tabs 1224A with distal retention features 1224A which engage corresponding retention features 1226A in compressing plate 1226. In this embodiment, compressing plate 1226 has a larger diameter than compressing plate 1216, and can be made larger than sealant ring 1211 so that when compressing plate 1226 is compressed against cartridge 1225 and guide base 1224, the outer periphery of compressing plate 1226 extends further down such that it contacts ring 1211 as well as the roof surface. In this embodiment, base 1223 can be made out of plastic or other less durable material since most or all of base 1223 may not be in the load path of the assembly 1210, unlike base 1212 previously described.

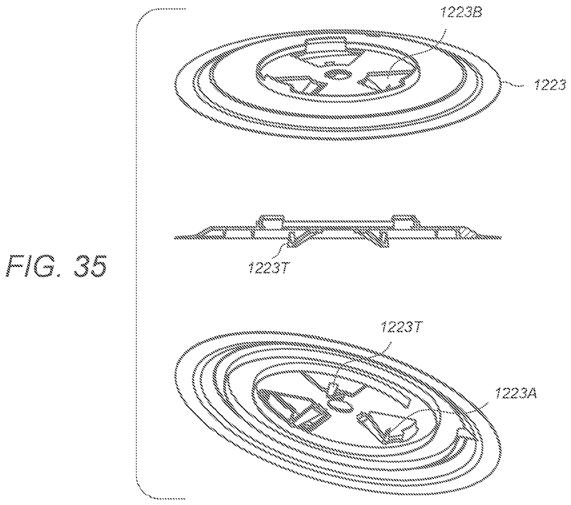

As shown in FIG. 34B, base 1223 includes a central hole 1223A for passage of the mechanical fastener and apertures 1223B for passage of flowable sealant. Base 1223 can further include one or more puncture tabs 1223T within openings 1223B for facilitating puncture of a bottom portion of sealant cartridge 1225. Puncture tabs 1223T are shown in more detail in FIG. 35. As shown, puncture tabs 122T include an inwardly projecting tab extending inwardly to an upward projecting barb that is elevated above base 1223 when base 1223 is set on the roof or other flat surface. Puncture tabs 1223T assist in the rupturing of the seal of cartridge 1225 when compressing plate 1226 is lagged down towards base 1223. Puncture tabs 1223T can be located at the point of apertures 1223B to further guide the flow of the sealant in cartridge 1225 under base 1223.

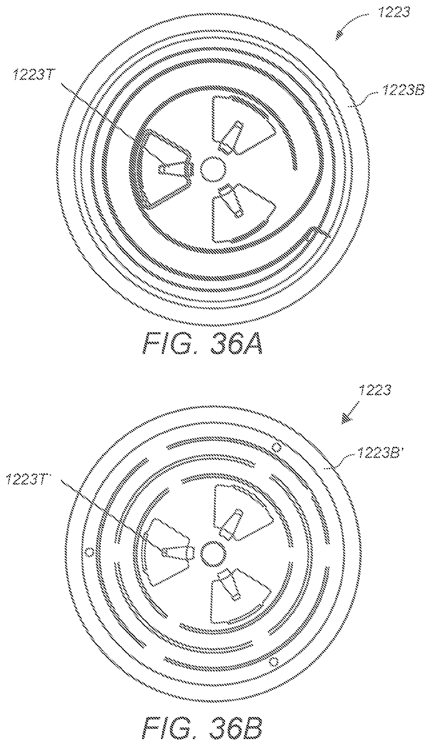

FIG. 36 illustrates two variations of the underside of base 1223 - 1223B, and 1223B' - which may assist in directing and evenly distributing the flow of sealant material from cartridge 1225 under base 1223. Design 1223B is a spiral design in which sealant material is guided outward spirally in an increasing large diameter path starting from the center. Design 1223B' is a labyrinth design consisting of a series of partial rings in which sealant is simultaneously guided away from the center in three directions, converging around each ring before moving on to the next ring. These or other bottom designs may be utilized with the various embodiments of the invention. It is appreciated that base could include further variations that include channels or geometries that facilitate controlled flow of sealant through the base so as to form a consistent and uniform chemical flashing.

Referring back to FIGS. 30 and 31, mounting bracket assembly 1220 may include a section of extrusion or roll formed steel that is somewhat longer than the diameter of base assembly 1210. Bracket assembly 1220 may have a downward U cross-sectional shape where the bottom of each side of the U rests on a ridge or flat surface formed in the top of compressing plate 1216. It should be appreciated that this design is merely exemplary and other types of mounting brackets may be used with system 1200 shown in these figures.

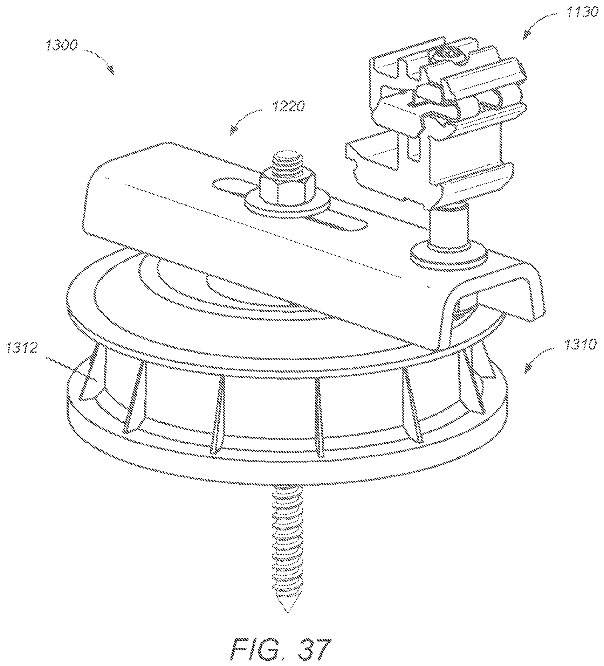

Referring now to FIGS. 37-43, these figures show a photovoltaic mounting system including a chemical flashing according to various embodiments of the invention. System 1300 is similar to that shown in the previous embodiments in that it includes base assembly 1310, mounting bracket 1220 and photovoltaic module coupling device 1130.

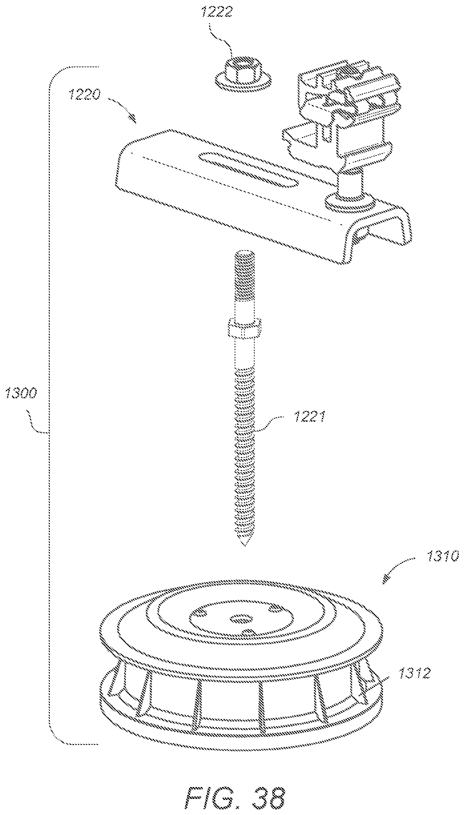

One difference over previous embodiments, is that several of the components of base assembly 1310 are combined or integrated into a single part. As can be seen in FIG. 3 7 and the exploded view in FIG. 38, however, the mounting system include an integrated base assembly 1310 that is integrated into a single component. Typically, base assembly 1310 is integrated such that it cannot be readily disassembled by an end-user.

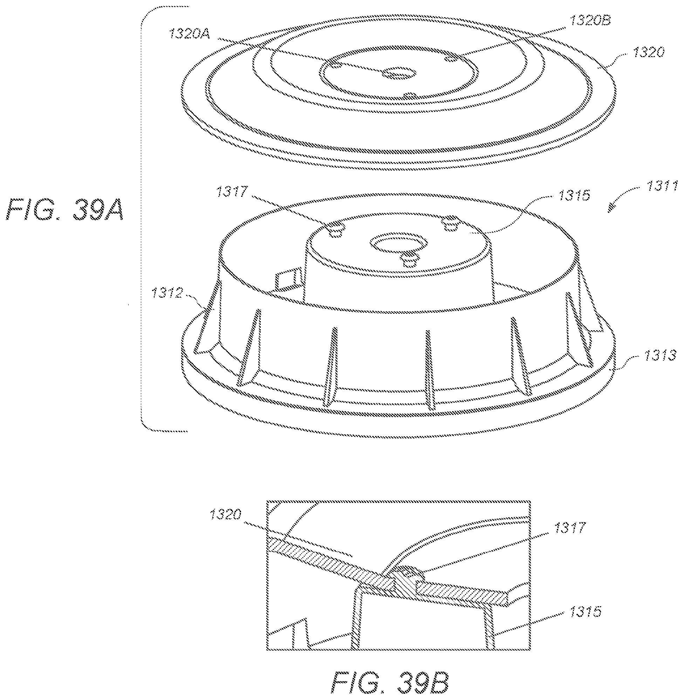

A partly exploded view of integrated guide base 1311 is shown in FIG. 39A. As can be seen, in addition to sealant ring 1313, base assembly 1311 includes an integrated guide 1311 and sealant reservoir 1315. In this embodiment, guide base 1311 includes one or more gussets 1312 to provide sufficient strength to maintain the integrity of the assembly prior to installation, yet allow directionally controlled collapse upon installation.

As shown, reservoir 1315 includes a center hole 1316 for allowing a lag bolt, hanger bolt, or other fastener to pass through. It is appreciated however, that reservoir could be formed in a shape that would not require a central hole or could be formed of a material that would allow the mechanical fastener to puncture the reservoir when inserted therethrough. In some embodiments, reservoir 1315 of guide base 1311 may include seal of foil or other material on its underside to protect the sealant from the air while still allowing for easy penetration during installation.

Reservoir 1315 can be attached to compressing plate 1320 by any suitable means. In the depicted embodiment, reservoir 1315 include one more pins 1317 for attaching and orienting guide 1311 to compressing plate 1320. As shown in FIG. 39, compressing plate 1320 may be attached to base assembly 1310 by pins 1317 on the top surface of reservoir 1315 which pass through reciprocal holes 1320B formed in compressing plate 1320, which also includes a central hole 1320A for passage of the mechanical fastener. Reservoir can then be secured through a process such as heat staking or ultrasonic bonding, thereby affixing pins 1317 and compressing plate 1320 to one another, as depicted in the detail cross-section shown at bottom of FIG. 39.

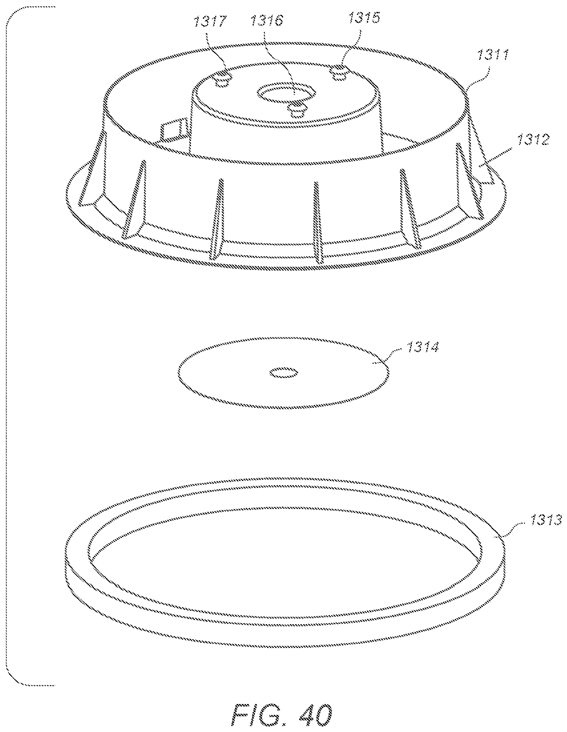

In various embodiments, the underside of reservoir 1315 includes a void in which sealant is placed prior to sealing with foil seal 1314 underneath that is surrounded by sealant ring 1313, as can be understood by referring to FIG. 40. Also, guide base 1311 can include multiple gussets 1312 to assist in uniform deformation of ring 1313 during installation. Typically, gussets 1312 are defined as tapered reinforcing ribs that are distributed along an outer wall of the integrated guide base 1311. In various embodiments, the top of reservoir 1315 may project higher than the walls of guide base 1311 so that reservoir 1315 is at least partially compressed by compressing plate 1320 before compressing plate 1320 engages the top of the remainder of guide base 1311. Installation of system 1300 is similar to that shown in other embodiments. A hanger bolt, lag bolt or other fastener is driven into the roof through base assembly 1310. Compressing plate 1320 first engages the top of reservoir 1315 of guide base 1311 and then the top edge of base 1311. Continued torqueing of fastener 1221 eventually causes compressing plate 1320 to compress reservoir 1315 and guide base 1311 until reservoir 1315 is fully compressed.

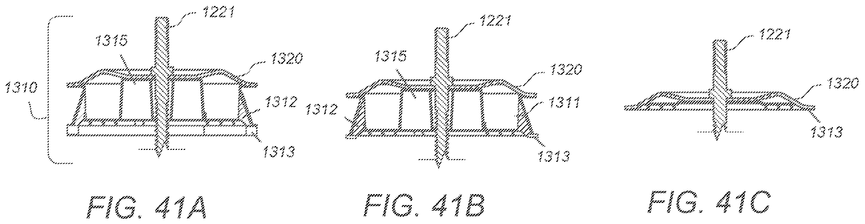

An example of such a configuration is shown in FIGS. 41A-41 C, which illustrates sequential cross-sectional views before, during and after mounting into the roof surface, respectively. In FIG. 41A, the top of reservoir 1315 can be seen extending above the walls of guide 1315. In FIG. 41B, compressing plate 1320 has partly compressed reservoir 1215 and abutted against the top of the walls of guide 1215. In FIG. 41C, compressing plate 1320 has been torqued into the roof surface to entirely compress reservoir 1315 and abut against sealant ring 1313 and roof surface, thereby extruding the flowable sealant into the space between the base and roof surface to form a chemical flashing along where the bolt 1221 penetrates the roof surface.

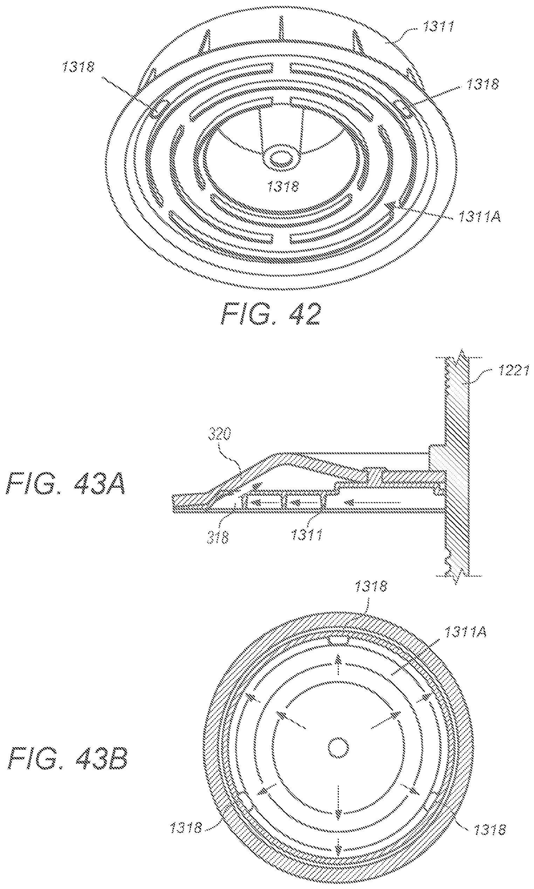

As shown in FIGS. 42 and 43A-43B, guide base 1311 can further include one or more vents 1318 that allow sealant to flow back up under housing 1320 rather than being forced out of the sides around ring 1313. These vents 1318 helps prevent any excess sealant from flowing onto the roof surface. The guide base 1311 can further include the labyrinth of open channels that facilitate controlled flow of sealant between guide base 1311 and the roof surface.

FIG. 42 shows a detailed view of the underside of guide base 1311. In various embodiments, this may include a chamber or void centered on a lag or hanger bolt opening. In addition, there may be a labyrinth 1311A or other pattern or network of open channels to further guide the flow of sealant under guide base 1311, eventually reaching vent holes 1318 which can direct excess sealant back under compressing plate 1320 to help prevent blow-outs through the side of ring 1313. FIG. 43A shows a detailed cross-sectional view of the sealant flow path (indicated by arrows) as the sealant flow through the labyrinth of channels and excess sealant flows through vent opening 1318 into a space between guide base 1311 and bell-shaped compressing plate 1320. FIG. 43B shows an underside detailed view indicating a sealant flow path through the labyrinth of channels 1311 A towards vent openings 1318 towards the outer periphery of guide base 1311.

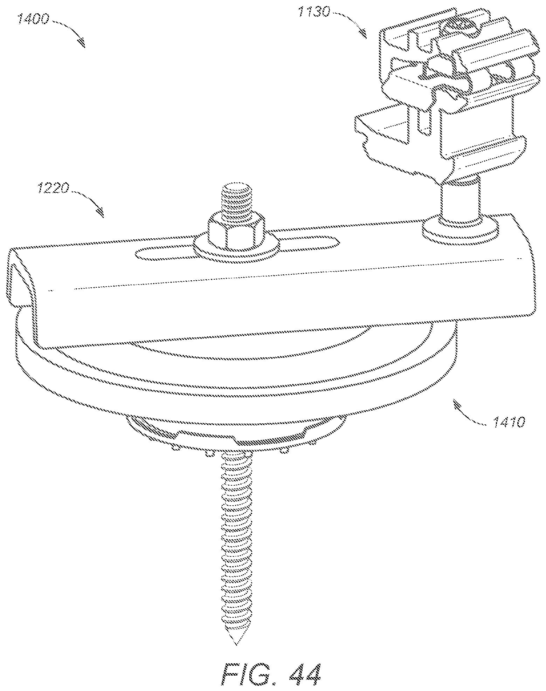

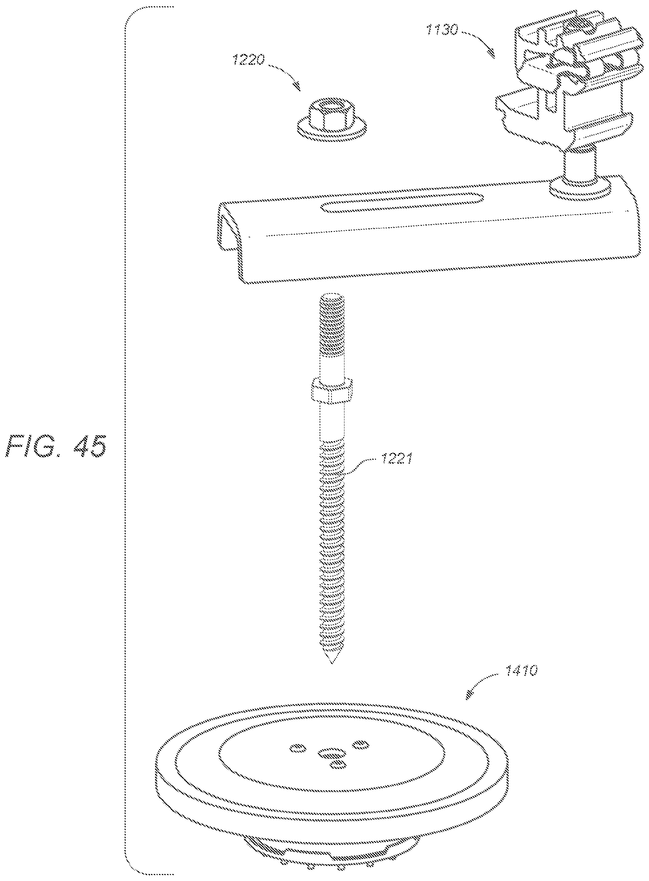

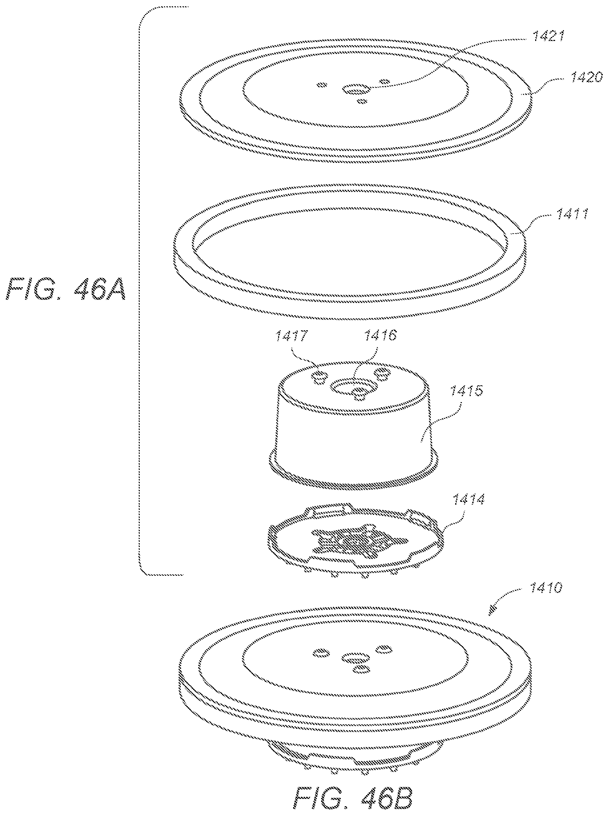

Referring now to FIGS. 44-48, these figures illustrate a photovoltaic mounting system adapted to form a chemical flashing according to yet another embodiment of the invention. As shown in the assembled view of FIG. 44 and can be understood further in the exploded view of FIG. 45, system 1400 includes base assembly 1410, mounting bracket 1220, and photovoltaic module coupling device 1130. Elements 1220 and 1130 are substantially the same or similar to those shown in previous embodiments, such that any previous detailed description can apply also to this embodiment. Base assembly 1410 includes compressing plate 1420, sealing ring 1411, sealant cartridge 1415 and an integrated guide base 1414 that acts as both as a guide for supporting the sealant cartridge as well as a base for placing against the roof surface. An exploded view of base assembly 1410 can be seen in FIG. 46A and an assembled view is shown in FIG. 46B.

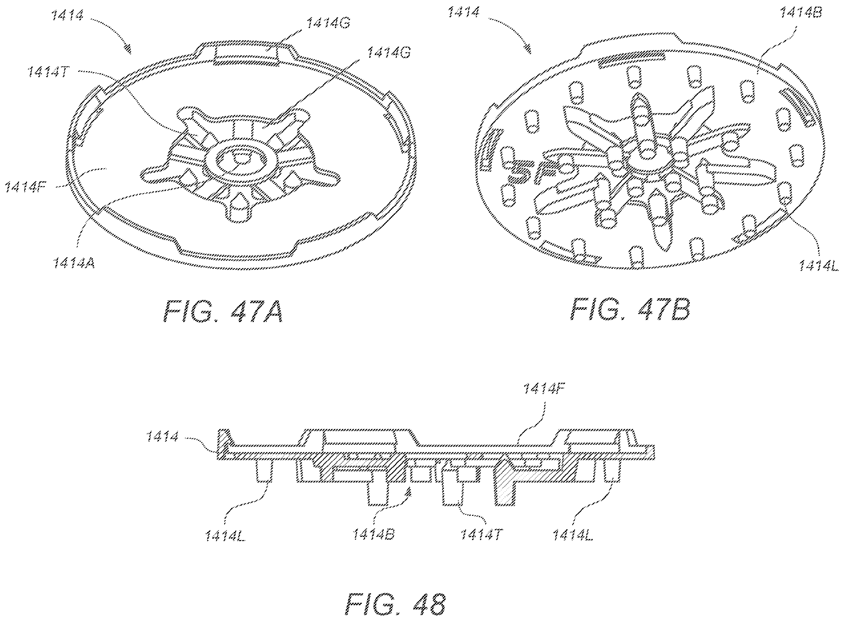

FIGS. 47A-47B and 26 show integrated guide base 1414 in greater detail, FIG. 47A illustrating a top side perspective view, FIG. 47B illustrated a bottom roof-facing side perspective view and FIG. 48 illustrating a cross-sectional side view. Guide base 1414 includes substantially planar front surface 1414F and bottom, roof-facing surface 1414B. As shown, roof-facing surface 1414B includes multiple columns or legs 1414L that support assembly 1414 and maintain a space during installation in which sealant can flow freely around the hanger bolt and under guide base 1414. Guide base 1414 also includes an a central opening 1414A for passage of the fastener, such as a hanger bolt or lag bolt, while allowing contact with the sealant material. A continuous aperture 1414C surrounds the central opening 1414A to allow flowable sealant to flow continuously about the fastener so that the chemical flashing forms is sealed around the mechanical fastener. One or more puncturing tabs 1414-T can be included to quickly and evenly rupture any seal on the bottom side of sealant cartridge 1415 when sealant cartridge 1415 is compressed against guide 1414 during installation. As can be seen in FIG. 48, the bottom of puncture tabs 1414T extend below the bottom of the spacer columns 1414L such that when guide base 1414 is pressed against the roof surface, puncture tabs 1414T are pivoted upwards thereby puncturing a breakable seal on the bottom, roof-facing side of sealant cartridge 1415. Guide base 1414 may also include one or more vertical tabs around its perimeter and/or coupling features 1414G that interface with an outer lip along the bottom of sealant cartridge 1415 to hold sealant cartridge 1415 in place both during transit and installation. It is appreciated that any of the above described features can be used separately from the other features described or can be incorporated into any of the other embodiments described herein.

As with sealant cartridge 1315, sealant cartridge 1415 may include center hole 1416 and multiple pins 1417 that can mate with reciprocal openings in compressing plate 1420 and can be attached by various means, such as heat staking or another suitable bonding process. These features enable base assembly 1410 to be shipped as a single integrated product. Sealant ring 1411 may be adhered to the underside (e.g., roof-facing side) of compressing plate 1420 using glue or other adhesive so that when compressing plate is compressed toward the roof during installation, sealant ring 1411 creates a perimeter around guide base 1414 to contain the flow of sealant under base assembly 1410.

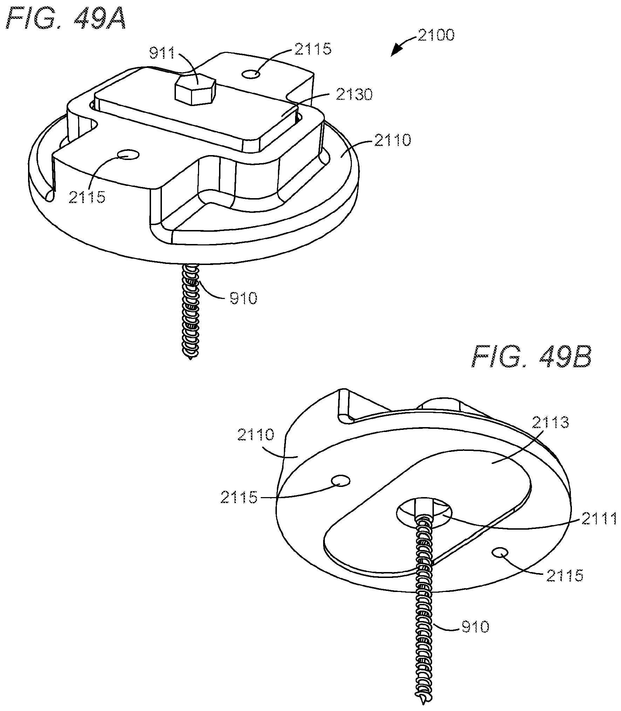

Referring now to FIGS. 49A-54, these figures all illustrate various views of particular example embodiments of lag bolt sealant injector systems combined with various embodiments of a roof mounted anchor in a photovoltaic mounting system. It is appreciated, however that these concepts are applicable to any anchor mounted to a planar surface where improved sealing of a mechanical fastener penetration is desired.

FIGS. 49A-49B depict anchor system 2100 for use in a mounting system securing a photovoltaic module to a roof surface. FIG. 49A depicts a first array facing side of anchor system 2100, which includes anchor base 2110 having through-hole 2111 for insertion of a mechanical fastener, such as lag bolt 910, and having a pair of support coupling features 2115 on a top surface of base 2110 that securely couple with a corresponding coupling feature of a support foot (not shown) for supporting a photovoltaic module or associated component (e.g. rock-it style connector). In this embodiment, support coupling features 2115 are defined as holes that securely couple with corresponding holes in a support foot by use of another mechanical fastener (e.g. threaded bolt). While support coupling features 2115 are depicted throughout as holes, it is appreciate that such features could encompass any coupling feature suitable for securing a support foot or arm to anchor base 2110.

Anchor base 2110 can be formed as an integral component, for example a cast-metal piece formed of steel or an aluminum alloy, so as to better withstand the anchoring loads and cyclical stresses applied to the anchor over the lifetime of the photovoltaic system. The sealant injection package includes a collapsible sealant reservoir positioned beneath a compressing plate 2130 so that upon tightening of lag bolt 910, fastener head 911 pressingly engages compressing plate 2130 thereby collapsing sealant reservoir and extruding a flowable sealant contained within through-hole 2111 beneath sealant reservoir, as can be seen in the underside view of anchor system 2110 shown in FIG. 49B. Hole 2111 is dimensioned with sufficient clearance around lag bolt 910 (e.g. 5-20 mm) so that the flowable sealant extrudes around the lag bolt. To provide additional control over the flow of sealant, the underside of anchor base 2110 includes a recessed portion 2113 that defines a relatively thin cavity that extends a distance around the lag hole formed by lag bolt 10. In some embodiments, recessed cavity extends at least 50 mm in each direction around hole 2111 to ensure sufficient sealing of lag hole as well as any adjacent secondary holes, such as failed test pilot holes. In one aspect, recessed area 2113 provides a continuous void of at least a pre-defined thickness (e.g. 1 mm or greater, typically about 2-8 mm) so that the flowable seal, upon curing, forms a chemical flashing. In some aspects, the chemical flashing is a substantially planar flashing member defined by a cured sealant that is formed as an integral component.

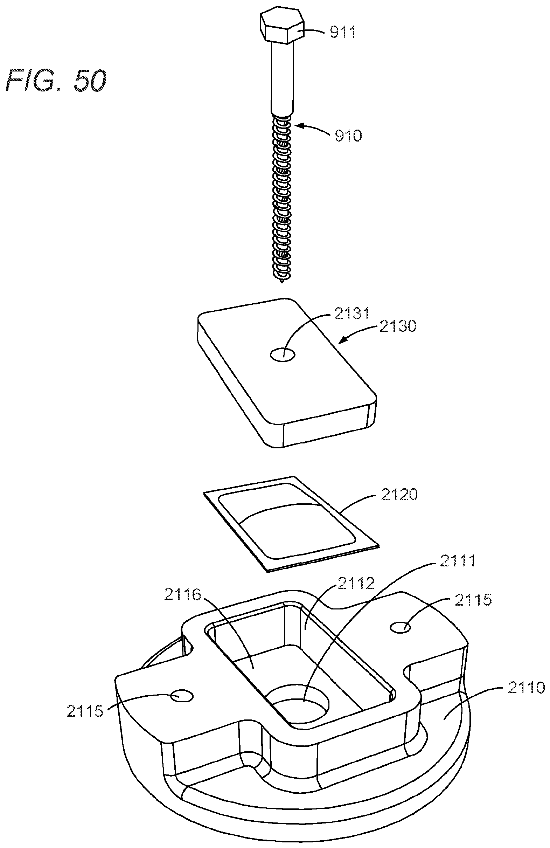

FIG. 50 shows an exploded view of anchor system 2100 of FIG. 49A. In this view, it can be seen that collapsible sealant reservoir 2120 is contained within a sealant receptacle 2112 accessed through a first array facing side of anchor base 2110 and rests on a support surface 2116 above the aperture of through hole 2111. Compressing plate 2130 fits atop collapsible sealant reservoir 2120 within receptacle 2112 and includes a central hole 2131 that aligns with aperture 2111. Lag bolt 910 can be inserted through hole 2131 and through collapsible reservoir 2120 and aperture of through-hole 2111 and into the lag hole in the roof surface. Typically, collapsible sealant reservoir 2120 is a collapsible, frangible packet (e.g. foil or polymer pouch) filled with a flowable sealant that cures when exposed to air and/or moisture upon release form the packet. In this embodiment, insertion of lag bolt 910 through the anchor assembly punctures the packet, while lag bolt head 211 presses against compressing plate 2130, thereby collapsing reservoir 2120 and forcing flowable sealant through the larger aperture of through-hole 2111. When the bottom surface of anchor base 2110 is placed flat against the roof surface, the sealant flows into the cavity defined by the recessed portion 2113 and surrounds the lag bolt about the penetration. In this embodiment, the cavity defines a planar void extending a distance about the lag bolt such that when filled with flowable sealant and cured, a chemical flashing is formed. In this embodiment, the chemical flashing formed is entirely contained under anchor base 2110 such that the flashing is protected from the elements. In addition, since the sealant is substantially contained within the cavity defined by the recessed portion, the load applied by lag bolt 910 is transferred through the bottom surface (e.g. non-recessed portion) such that the chemical flashing is not exposed to significant strains or stresses during the lifetime of the anchor.

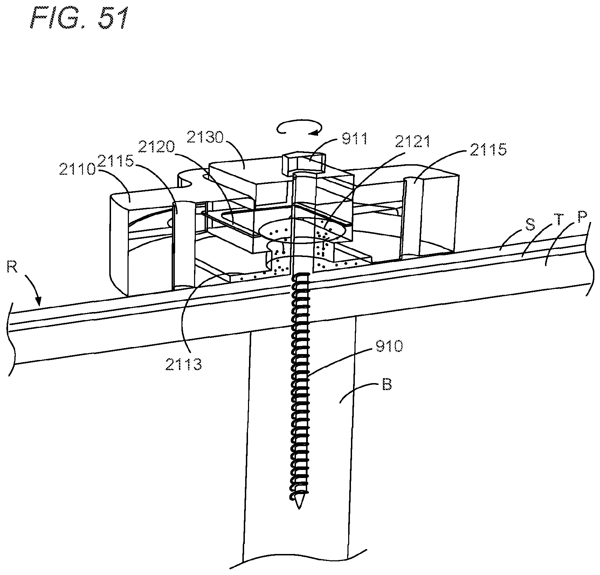

FIG. 51 shows the anchor system 100 of FIGS. 49A-49B after being mounted to roof R by tightening lag bolt 210, which extends through anchor system 2100 and penetrates through shingle S, underlying tar paper T and plywood P and into the rafter or beam B supporting roof R. As can be seen, when anchor base 2110 is engaged against shingle S, recessed portion 2113 forms a thin cavity extending about the lag bolt adjacent the lag hole. While in this embodiment, through-hole 2111 defines the aperture through which sealant flows, it is appreciated that an additional member, such as a sealant carrier, could be inserted into the receptacle beneath collapsible reservoir 2120 so as to define an aperture of a different size than through-hole 2111, if needed. As shown, as lag bolt 910 is tightened, head 911 presses against compressing plate 2130 thereby collapsing the punctured reservoir 2120 thereby releasing flowable sealant and forcing flow of sealant through aperture and into the cavity. Tightening of lag bolt 910 continues until compressing plate 2130 bottoms out on support surface 2116 with the spent, collapsed reservoir 2120 sealed in between.

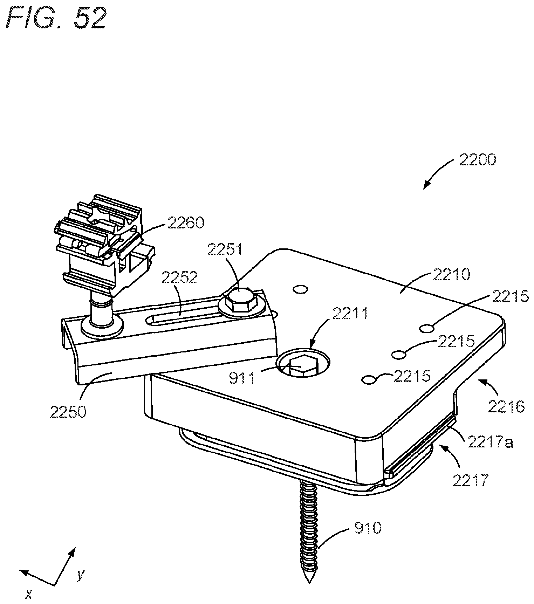

FIG. 52 illustrates exemplary mounting system 2200, which includes an anchor system having a sealant injection package and a support foot 2250 having a rock-it style connector 2260 for securely attaching to a photovoltaic module. In this embodiment, anchor base 2210 is formed as a shell with an open cavity, which is positioned against the roof surface when mounted thereon. Base 2210 is formed in a generally rectangular shape having a planar top surface with multiple support coupling features 2215 to which support foot 2250 can be securely coupled to in various differing positions. In this embodiment, support coupling features 2215 are holes that couple with a corresponding hole or slot 2252 in foot 2250 by use of another mechanical fastener (e.g. bolt, washer). Slot 2252 allows the position of foot 2250 to be adjusted along its longitudinal axis before securely coupling to the coupling feature 2215. As shown, the multiple support coupling features 2215 include two rows of three holes extending lengthwise on a top surface of anchor base 2210 on opposite sides of the through-hole 2211. Such a configuration is advantageous as the location of a rafter or beam in a roof to which anchor 2200 can be coupled often does not correspond to a desired position of a foot for supporting the photovoltaic module, particularly since a support connector, such as rock-it connector 2260 can only couple to the photovoltaic module at certain locations on the module. By including multiple support coupling features 2215 in a top surface of anchor base 2210, preferably distributed along two transverse axes (e.g. x and *y*), the above-described configuration allows for a wide range of differing positions and alignments in which support foot 2250 can be secured to the roof via anchor system 2200.

In various embodiments, the down-roof most support coupling feature 2215 is spaced a suitable distance away from the down-roof edge of the top surface so that a substantial portion (e.g. about half or more) of support foot 2250 engages the top surface of base 2210. This configuration ensures a significant portion of the support foot engages the base 2210 so as to limit the length of the cantilevered load path and prevent the foot from prying anchor 2210 off the roof. In some embodiments, system 2200 is provided with support foot 2250 that is shorter than standard (e.g. less than 80 mm, about 66 mm or less) so as to ensure that a substantial portion of support foot 2250 is engaged against a top planar surface of anchor base 2210 regardless of which support coupling feature the foot is attached to. Typically, the support foot is secured to anchor base 2210 with the foot extending in a generally downward direction, as shown.

In another aspect, anchor base 2210 includes an outer perimeter circumscribing the open cavity that engages the roof surface. As shown in FIG. 52, the outer perimeter includes a main portion 2217 that engages a shingle course outside of the chemical flashing formed about the lag hole and a stepped-up portion 2216 that engages an adjacent shingle course up-roof of the lag hole. Stepped-up portion 2216 is dimensioned so as to accommodate a height differential of the up-roof adjacent shingle course. This height differential can vary based on the type and style of shingles, but typically is within a range of between 5 mm to 30 mm. One advantage of such a configuration is that stepped-up portion 2216 allows for a ready frame of reference for the installer to position and align anchor base on the roof. In addition, configuring anchor base 2210 to straddle the adjacent shingle course can ensure that the bottom down-roof edge of anchor base 2210 is spaced away from a drip edge of the shingle course so as to avoid water and debris from entering the cavity from down-roof. The outer perimeter can further include a ridge or lip 2217a that further enhances engagement of the perimeter edge of anchor base 2210 with roof surface so as to further improve sealing as well as containment of the extruded flowable sealant within the cavity. As shown, ridge or lip 2217a is included only on the perimeter of the main portion that extends along the y-direction, although it is appreciated that such a ridge or lip could extend along up-roof portion 2216 or about the entire perimeter. Such a lip or ridge could be included on the perimeter of any of the embodiments described herein.

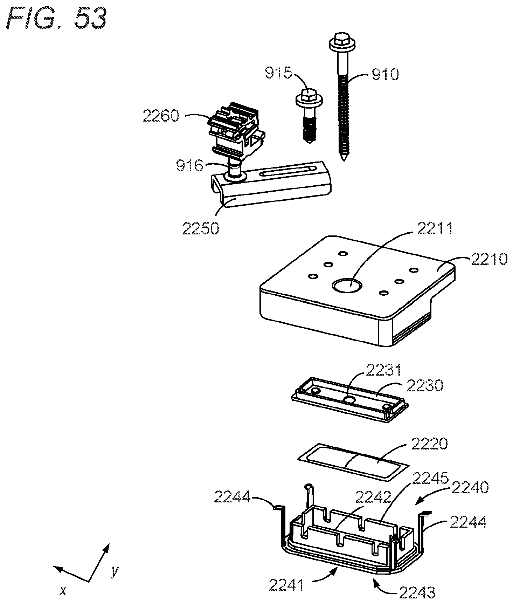

In this embodiment, the sealant injection package is disposed within the open cavity of anchor base 2210. As can be seen in the exploded view shown in FIG. 53, the sealant injection package includes collapsible sealant reservoir 2220, a compressing plate 2230 disposed above the reservoir 2220 and a sealant carrier 2240 adapted to carry the collapsible sealant reservoir 2220. Typically, the sealant reservoir 2220 is separable from and removable from the carrier, but in various embodiments, system 2200 is provided to an end-user as a package with the reservoir 2220 disposed within the carrier. Carrier 2240 includes sealant support surface 2242 on which sealant reservoir 2220 is placed, which includes aperture 2241 through which sealant is extruded when sealant reservoir 2220 is collapsed. Carrier 2240 can include sidewalls 224.5 so as to define a receptacle for carrying sealant reservoir 2220 and receiving compressing plate 2230 atop sealant reservoir 2220.

In various embodiments, the various components of the anchor system can be releasably coupled together with one or more releasable retaining feature so as to maintain the assembly during transit to an end-user. For example, in the embodiment shown in FIG. 52, carrier 2240 can further include one or more retaining features 2244, such as flexible clips, cords, tabs or tethers, that releasably engage corresponding features within the underside cavity of anchor base 2210 so as to loosely and removably couple carrier 2240 with anchor base 2210 so that, in combination, anchor base 2210 and carrier 2230 retain compressing plate 2230. Any of the sealant reservoirs carriers described herein can include one or more such retaining features for maintaining the components of the system in an partially or fully assembled configuration.

It if further appreciated that any of the embodiments described herein can include one or more retaining features adapted to couple two or more components of the system together so that the anchor system can be shipped or provided to a user in a partially or fully assembled configuration. Such components can include but are not limited to the sealant reservoir, carrier, compressing plate, anchor base and mechanical fastener. Such retaining features can include various interfacing features, such as tabs, protrusions, or tethers that interface with corresponding recess, slots or holes, or any interfacing features suitable for coupling two components together. In various embodiments, such retaining features are adapted to loosely and releasably couple components together so that the end-user can readily remove one or more components (e.g. lag bolt, carrier) to facilitate mounting of the anchor system to the roof. In some embodiments, the retaining features are adapted such that retraction of one component releases the coupling. For example, the system in FIG. 53 can be provided with lag bolt 910 extending through the through-hole 2211 of base 2210 through opening 2231 in compressing plate 2231, adjacent an intact sealant package 2220 and through aperture 2241 of carrier 2240 loosely clipped within base 2210 with a distal end of bolt 910 loosely coupled with a distal retaining feature (e.g. clip or tether) attached to an underside of base 2210. In such a configuration, detachment of the distal end of lag bolt 910 from the distal retaining feature readily releases all or a portion of the various components of the assembly. Such a configuration is advantageous as each anchor assembly can be transported and readily handled by a user stationed on a roof surface without having to separately handle and possibly lose various components. When ready for mounting, the assembly can readily be partly or fully disassembled to facilitate mounting on the roof.

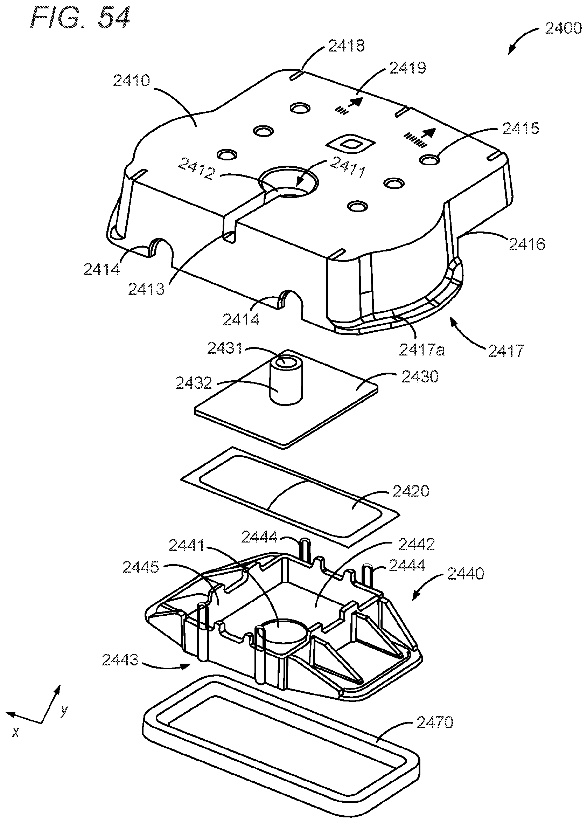

FIG. 54 illustrates an exploded view of another example embodiment somewhat similar to that in FIGS. 52-53 apart from modification of certain aspects of various components. It is appreciated that any of these or similar modifications could be included on various components in any of the embodiments described herein.

In one aspect, the embodiment shown in FIG. 54. is an anchor system 2400 that includes anchor base 2410 having a generally rectangular shape simlar to that in FIG. 53, but the lateral sides of main portion 2417 are outwardly curved. This configuration provides an enlarged cavity that extends laterally further outside of the cavity defined by recessed portion 2443 of carrier 2440 (recessed portion 2443 being simliar to recessed portion 2113 in FIG. 49B). Such a configuration may help contain any excess sealant flow that extends beyond the cavity about lag bolt at the lag hole. In addition, lip or ridge 2417a is included on outwardly curved sides of main portion 2417 so as to further enhance engagement with the roof surface, as described previously.

In another aspect, the embodiment in FIG. 54 further includes compressing plate 2430 with hole 2431 for passage of the lag bolt. Compressing plate 2430 further includes upwardly protruding collar 2432 that extends a distance upwards so as to extend above a top opening of through-hole 2411 atop anchor base 2410. Such a configuration allows the lag bolt head or an associated washer to engage the top surface of collar 2432 so as to pressingly engage compressing plate 2430 downwards to extrude the flowable sealant from the collapsible sealant reservoir 2420 punctured by the lag bolt extending therethrough. Lag bolt head continues to press the top surface of collar downward and then engages recessed shoulder 2412 circumscribing the top opening of through-hole 2411 to secure anchor base 2410 to the roof surface. Upon engaging recessed shoulder 2412, the load applied by the fastener head is transferred largely to anchor base 2410, which avoids exerting the load through carrier 2440. Such a configuration allows carrier 2440 to be formed of a less durable material, such as a molded polymer or thermos-resin, while anchor base 2410 is typically formed of a higher strength, rigid material, such as a metal casting (e.g. aluminum or steel alloy). In such embodiments, having recessed shoulder region 2412 or counter-bore about the mechanical fastener head, anchor base 2410 can further include a drainage grove 2413 extending down-roof from recessed portion 2412 to the second side of anchor base 2410 to allow drainage of any residual water accumulating in recessed portion 2412. Anchor base 2410 can further include one or more weep holes or notches 2414 along the down-roof side of base 2410 to allow drainage of any water that accumulates within the cavity. It is appreciated that the above described drainage groove and weep holes or notches can be included on any of the above described embodiments and in various other such embodiments.

In this embodiment, carrier 2440 includes an enlarged aperture 2441 in sealant supporting surface 2442, recessed underside portion 2443, and four retaining tabs 2444 that engage corresponding features within an underside cavity of anchor body 2410. Carrier 2440 further includes sidewalls 2445 that define a receptacle for carrying sealant reservoir 2420 during transport and handling.

In yet another aspect, anchor system 2400 further includes compressible gasket 2470 that is dimensioned to fit just outside the recessed portion 2443 on an underside of carrier 2440. Gasket 2470 is formed of a compressible material, such as a foam or elastomeric material, so as to seal any openings or gaps between mating surfaces surrounding the recessed portion. Such openings are typically due to uneven or irregular shingle surfaces or the drip edge between two adjacent course of shingles. By sealing any opening or gaps, gasket 2470 further improves containment of the flowable sealant with the cavity defined by recessed portion so as to define a more consistent and uniform chemical flashing of cured sealant.

In yet still another aspect, anchor base includes alignment markers 2418 outwardly visible to a user during installation of the anchor on the roof surface. Alignment markers 2418 correspond to a location of outer bounds of the recessed portion 2443 defining the cavity between carrier 2440 and the roof surface so as to enable the user to visualize the area in which the chemical flashing is formed. This is particularly advantageous for sealing of one or more unused pilot holes that may have been formed adjacent the lag hole when initially attempting to locate the rafter or beam supporting the roof surface. Typically, alignment markers 2417 includes pairs of alignment markers 2418 indicating the outer bounds of the recessed area along one or more axes. In some embodiments, anchor base can include an outline on the top surface that corresponds to the recessed portion to further allow for ready visualization of the location in which the chemical flashing will be formed. By observing the position of markers 2418 or the outline, an installer can manually position anchor base 2410 so as to cover any adjacent pilot holes before proceeding with installation. If any pilot holes are disposed outside of the perimeter indicated by the markers, the installer must manually seal or fill the holes.

The embodiments of the present inventions should not be limited in scope by the embodiments described herein. Indeed, various modifications of the embodiments of the present inventions, in addition to those described herein, will be apparent to those of ordinary skill in the art from the foregoing description and accompanying drawings and claims. Thus, such modifications are intended to fall within the scope of this invention. Further, although some of the embodiments of the present invention have been described herein in the context of a particular implementation in a particular environment for a particular purpose, those of ordinary skill in the art will recognize that its usefulness is not limited thereto and that the embodiments of the present inventions can be beneficially implemented in any number of environments for any number of purposes. Accordingly, this disclosure should be construed in view of the full breath and spirit of the embodiments disclosed herein and claimed below.

Below follow a list of numbered items. These items may be combined with any other features described herein in any combination beyond those expressly stated below:
1. A photovoltaic mounting system comprising:
   at least one photovoltaic mounting bracket including a lower base portion adapted for mounting on a roof surface and an upper support portion adapted for supporting a photovoltaic module or associated support component;
   a sealant injection package comprising a collapsible sealant reservoir containing a flowable sealant therein and adapted for directionally controlled release of the flowable sealant upon collapse of the reservoir, wherein the sealant injection package is removable from the mounting bracket;
   a mechanical fastener; and
   a compressing plate disposed adjacent the collapsible sealant reservoir and having a through hole for passage of the mechanical fastener therethrough such that tightening of the fastener into the roof surface during mounting of the bracket to the roof surface moves the plate against the collapsible reservoir, thereby compressing the reservoir to effect directionally controlled release of the flowable sealant between the base portion and the roof surface and around the portion of the fastener penetrating the roof surface.
2. The photovoltaic mounting system of item 1, wherein the compressing plate comprises:
   a head of the mechanical fastener, a washer, a nut, an upper plate of the sealant injection package, a cap or plate disposed atop the sealant injection package and separable therefrom, or any combination thereof.
3. The photovoltaic mounting system of item 1, further comprising:
   a sealant guide for directing flow of the flowable sealant, delivered from the reservoir during collapse, to between the base portion and the roof surface and around a portion of the fastener extending through the roof surface.
4. The photovoltaic mounting system of item 3, wherein the sealant guide comprises any of:
   a hole or slot defined in a bottom surface of the base portion of the bracket, or
   a shaped component disposed along a bottom of the sealant injection package.
5. The photovoltaic mounting system of item 4, wherein the shaped component is any of:
   an integrated feature disposed along the bottom of the sealant injection package, or
   a separable component of the sealant injection package that releasably couples with each of the base portion of the bracket assembly.
6. The photovoltaic mounting of item 1, wherein the sealant injection package a includes a rigid or semi-rigid outer shell and a frangible portion in fluid communication with the interior of the sealant reservoir and through which the flowable sealant is released when the reservoir is collapsed, wherein the outer shell comprises a cylindrical shell with multiple tiers dimensioned to nest within one another so as to collapse the reservoir when the fastener is torqued into the roof.
7. The photovoltaic mounting of item 6 further comprising:
   a cylindrical cap disposed atop the sealant injection package and below a head or a nut of the fastener such that when the fastener is torqued against the roof, the cap covers the collapsed sealant injection package.
8. The photovoltaic mounting of item 6 further comprising:
   a sealant guide adapted to releasably couple with the base portion of the bracket along an upper side thereof and to releasably couple with a bottom side of the sealant injection package and to releasably couple with a bottom side of the sealant injection package, wherein the sealant guide defines a flow path that directs flow of sealant upon collapse of the reservoir between the base portion and the roof surface and around a portion of the fastener that penetrates the roof surface.
9. The photovoltaic mounting of item 6 further comprising:
   a planar spacer adapted for placement between the base portion of the bracket and the roof surface, the spacer having a through hole to allow passage of the lag bolt therethrough, wherein the spacer defines an enclosed space between the base portion of the bracket and the roof surface so as to contain flow of sealant within the space upon collapse of the sealant reservoir.
10. The photovoltaic mounting of item 6 wherein the sealant injection package is adapted such that the collapsible cylindrical reservoir is cylindrical and surrounds a through passage extending longitudinally for passage of a lag bolt,
   wherein the sealant injection package further includes:
   an outer cylindrical shell in which the sealant reservoir is disposed that comprises multiple tiers dimensioned so as to nest within one another when the cylindrical reservoir is collapsed, and
   a disc disposed atop the cylindrical sealant reservoir so as to effect uniform collapse of the reservoir when the disc is compressed against the sealant reservoir by torqueing of a lag bolt extending through the passage into a roof surface.
11. The photovoltaic mounting of item 6 wherein the sealant injection package comprises a cylindrical piston with a through-hole through which the fastener extends, the cylindrical piston including a rigid or semi-rigid out shell, a collapsible cylindrical reservoir therein, and a disc atop the cylindrical reservoir for engagement with the fastener for compressing the collapsible reservoir when the fastener is torqued down, and a frangible portion disposed at the bottom of the cylindrical reservoir to effect directionally controlled release of the sealant upon collapse of the reservoir through a sealant injection guide.
12. The photovoltaic mounting of item 11, wherein the sealant injection guide includes a protruding ridge along the bottom of the sealant injection package that interfaces with a corresponding hole or slot in the base portion of the bracket.
13. The photovoltaic mounting of item 1, wherein the base portion is a rectangular extrusion having a lengthwise channel defined therethrough, wherein the sealant injection dispensing packaging comprises:
   one or more collapsible sealant reservoir packets; and
   a carrier for supporting the one or more sealant reservoir packets, wherein the carrier is slidable into the channel of the base portion to allow insertion, removal and/or replacement of the sealant reservoir packets.
14. The photovoltaic mounting of item 13, wherein the base portion includes an underside channel defining a semi or fully enclosed space between the bottom surface of the base portion and the roof surface into which sealant flows when mounted.
15. A photovoltaic mounting system having a chemical flashing comprising:
   a base portion;
   a photovoltaic module mounting bracket including at least one photovoltaic coupling device;
   a collapsible sealant reservoir positioned between the mounting bracket and the base portion; and
   a mechanical fastener, wherein torqueing of the mechanical fastener to attach the photovoltaic mounting system to a roof surface compresses the collapsible sealant reservoir causing sealant to flow under the base portion around the fastener.
16. The photovoltaic mounting system of item 15, wherein the collapsible sealant reservoir comprises one or more collapsible packets, each packet comprising a collapsible shell defining a container with an open face and a frangible film or membrane sealed to the container across the open face so as to contain the sealant within the packet.
17. The photovoltaic mounting system of item 15, wherein the collapsible sealant reservoir comprises a cylindrical shaped container having an axial passageway through which the fastener extends.
18. The photovoltaic mounting system of item 17, wherein the cylindrical shaped container includes multiple tiers dimensioned to nest within one another so as to collapse the reservoir when the fastener is torqued into the roof surface.
19. A photovoltaic mounting system comprising:
   at least one photovoltaic mounting bracket including a surface adapted to rest on a roof surface;
   at least one reservoir of sealant mechanically coupled to the at least one photovoltaic mounting bracket; and
   a piston portion that is engaged when a fastener is torqued down through the at least one photovoltaic mounting bracket thereby compressing the at least one reservoir and injecting the flowable sealant between the at least one mounting bracket and the roof surface and around the lag bolt.
20. The photovoltaic mounting system of item 19, wherein the collapsible sealant reservoir comprises a cylindrical shaped container having an axial passageway through which the fastener extends and the piston portion comprises a disc disposed atop the cylindrical shaped container.
21. A photovoltaic mounting system for mounting on a roof surface, the system comprising:
   a base assembly adapted to couple with and support a mounting bracket supporting a photovoltaic module coupling device, wherein the base assembly includes a through-hole for insertion of a mechanical fastener and further comprises:
   a sealant guide,
   a compressing member, and
   a sealant cartridge containing a flowable sealant sealed therein,
   wherein the sealant cartridge is held between the sealant guide and the compressing member within the base assembly without requiring any additional separate coupling members to maintain the assembly.
22. The photovoltaic mounting system of item 21, wherein the sealant guide includes a first set of coupling features that releasably couple with the cartridge or the compressing plate so as to hold the base assembly together via the one or more coupling features.
23. The photovoltaic mounting system of item 22, wherein the first of coupling features comprises a plurality of tabs extending from or near an outer periphery of the sealant guide towards the compressing plate and adapted to releasably engage with an outer periphery of the compressing plate so as to maintain the sealant cartridge between the sealant guide and the compressing plate.
24. The photovoltaic mounting system of item 23, wherein the compressing plate includes a one or more openings along the periphery thereof that are arranged so as to receive a distal retention feature of each of the plurality of tabs.
25. The photovoltaic mounting system of item 23, wherein the compressing plate has a convex outer surface facing away from the sealant guide so as to inhibit accumulation of rain and/or debris when mounted on the roof surface.
26. The photovoltaic mounting system of item 23, wherein each of the plurality of tabs of the first set includes a release feature on a distal end thereof to facilitate manual release of the compressing member by pressing against the release features of the plurality of tabs.
27. The photovoltaic mounting system of item 22, wherein the base assembly further comprises:
   a base adapted to releasably couple to the sealant guide by a second set of coupling features of the sealant guide.
28. The photovoltaic mounting system of item 27, wherein the sealant guide includes a central hole for passage of the mechanical fastener therethrough and a series of apertures distributed radially about the central hole so as to facilitate uniform distribution of flowable sealant around any roof surface penetration through which the mechanical fastener extends when mounted on the roof surface.
29. The photovoltaic mounting system of item 28, wherein the base includes a central hole for passage of the mechanical fastener therethrough and a plurality of openings distributed about the central hole that are aligned with the plurality of apertures in the sealant guide when mounted on the roof surface.
30. The photovoltaic mounting system of item 29, wherein the second set of coupling features comprises a plurality of tabs extending towards the base, each of the plurality of tabs having a distal retention feature adapted to engage an edge of the plurality of openings in the base.
31. The photovoltaic mounting system of item 30, wherein the retention feature comprises an outwardly extending wedge shaped portion positioned to facilitate lateral deflection of the plurality of tabs upon pressing of the guide against the base and provide a snap-fit coupling between the guide and the base.
32. The photovoltaic mounting system of item 27, wherein the base has an underside recess on a roof-facing side so as to define a space between the base and the roof when mounted thereon for flowable sealant to fill so as to form the chemical flashing.
33. The photovoltaic mounting system of item 21, wherein the cartridge comprises a breakable seal on a roof facing side so as to facilitate directionally controlled release of flowable sealant through the seal upon fastening of the base assembly onto the roof.
34. The photovoltaic mounting system of item 33, wherein one or barbs extend from the sealant guide or an attached base, the one or more barbs being directed towards the breakable seal so as to facilitate breaking of the seal upon fastening of the base assembly to the roof surface.
35. A photovoltaic mounting system for mounting to a roof surface, the system comprising:
   a base assembly adapted to couple with and support a mounting bracket supporting a photovoltaic module coupling device, wherein the base assembly includes a through-hole for insertion of a mechanical fastener and further comprises:
   a base,
   a compressing member,
   a sealant guide having first set of coupling features adapted to releasably couple with the compressing member, and
   a sealant reservoir containing a flowable sealant sealed therein,
   wherein the sealant cartridge is fittingly received within the sealant guide and held between the sealant guide and the compressing member within the base assembly by the first set of coupling features.
36. The photovoltaic mounting system of item 35, wherein the first set of coupling features include a plurality of protrusions fittingly received within corresponding openings in the compressing member.
37. The photovoltaic mounting system of item 35, wherein each of the plurality of tabs of the first set includes a release feature on a distal end thereof to facilitate manual release of the compressing member by pressing against the release features of the plurality of tabs.
38. The photovoltaic mounting system of item 35, wherein the sealant guide, sealant reservoir and base are integrated within a single component having ribs or gussets that provide sufficient support to maintain sealed sealant reservoir yet allow directionally controlled collapse of the reservoir when the base assembly is fastened to the roof surface.
39. The photovoltaic mounting system of item 35, wherein the base assembly further includes:
   a reinforcing ring adapted to fittingly receive the sealant cartridge and provide reinforcement against blow-out of sealant through a side-wall of the sealant cartridge.
40. A photovoltaic mounting system comprising:
   a photovoltaic module coupling device;
   a mounting bracket supporting the photovoltaic module coupling device; and
   a base assembly releasably coupled to the mounting bracket and having a through-hole for insertion of a mechanical fastener, wherein the base assembly comprises:
      a sealant guide,
      a compressing member, and
      a sealant cartridge containing a flowable sealant sealed therein,
      wherein the sealant cartridge is held between the sealant guide and the compressing member within the base assembly without requiring any additional separate coupling members to maintain the assembly.

## Claims

1. A photovoltaic mounting system comprising:
a base assembly configured to mount to a support structure and to couple with and support a photovoltaic mounting bracket, the base assembly including:
a base defining a first aperture;
a compressing plate defining a second aperture; and
a collapsible sealant cartridge positioned between the base and the compressing plate, the collapsible sealant cartridge containing a sealant therein;
wherein the first aperture and the second aperture are configured to receive a fastener to mount the base assembly to a surface of the support structure; and
wherein tightening of the fastener into the surface of the support structure moves the compressing plate against the collapsible sealant cartridge to effect release of the sealant.

2. The photovoltaic mounting system of Claim 1, wherein the collapsible sealant cartridge defines a third aperture configured to receive the fastener.

3. The photovoltaic mounting system of Claim 1 or Claim 2, further comprising the fastener.

4. The photovoltaic mounting system of any one of Claims 1-3, further comprising the photovoltaic mounting bracket.

5. The photovoltaic mounting system of any one of Claims 1-4, wherein the collapsible sealant cartridge is removable from the base assembly.

6. The photovoltaic mounting system of any one of Claims 1-5, wherein the collapsible sealant cartridge includes a rigid or semi-rigid outer shell and a frangible portion through which the sealant is released then the collapsible sealant cartridge is compressed.

7. The photovoltaic mounting system of any one of Claims 1-6, wherein the base assembly includes a sealant guide configured to direct a flow of the sealant from the collapsible sealant cartridge to between the base and the surface.

8. The photovoltaic mounting system of any one of Claims 1-7, wherein the base assembly includes the sealant guide configured to direct the flow of the sealant from the collapsible sealant cartridge to between the fastener and the surface.

9. The photovoltaic mounting system of Claim 7 or Claim 8, wherein the collapsible sealant cartridge is positioned between the sealant guide and the compressing plate.

10. The photovoltaic mounting system of any one of Claims 7-9, wherein the sealant guide includes one or more first coupling features that releasably couple with the base.

11. The photovoltaic mounting system of Claim 10, wherein the base defines one or more first retention features that engage with the one or more first coupling features.

12. The photovoltaic mounting system of any one of Claims 7-11, wherein the sealant guide includes one or more second coupling features that releasably couple with the compressing plate.

13. The photovoltaic mounting system of Claim 12, wherein the compressing plate defines one or more second retention features that engage with the one or more second coupling features.

14. The photovoltaic mounting system of any one of Claims 1-13, wherein the collapsible sealant cartridge includes one or more pins, and the compressing plate defines one or more pin apertures that engage with the one or more pins.

15. The photovoltaic mounting system of any one of Claims 1-6, wherein the base includes one or more puncture tabs configured to puncture the collapsible sealant cartridge as the compressible plate compresses against the collapsible sealant cartridge.
